# EUROPEAN PATENT APPLICATION

(11) **EP 2 862 447 A1**
(43) Date of publication of application: **22.04.2015**
(21) Application number: 13306422.0
(22) Date of filing: 16.10.2013
(51) Int. Cl.: A23D 9/00, A23L 1/00, A23L 1/0534, A23L 1/056, A23C 3/00, A23C 9/12

(54) **Multilayer microcapsules containing an oxidizable active, and a process for preparing the same**

(71) Applicant: IDCAPS, 17000 La Rochelle (FR)
(72) Inventor: Buisson, Pierre, 17140 Lagord (FR); Chaigneau, Carine, 17000 La Rochelle (FR); Vendeville, Jean-Eudes, 17180 Perigny (FR)
(74) Representative: Grosset-Fournier, Chantal Catherine

(57) **Abstract**

The present invention relates to multilayer microcapsules containing an oxidizable active, and a process for preparing the same.

## Description

The present invention relates to multilayer microcapsules containing an oxidizable active, and a process for preparing the same.

There is an increasing need in the industry, for example in the food, pharmaceutical or cosmetics industry, for protection of active agents from the medium that surrounds said active agents in particular to achieve a better conservation of said active agents.

One of the main issues of encapsulation is to be able to protect drugs from external medium but also to allow the right release or the right access to this drug when needed. This access is very often possible through a quick or controlled release in the medium, due to chosen properties of the encapsulating agent.

This dual aim of protection and release becomes more complex as soon as exchanges between drugs and medium need to be kept out of direct interactions in-between drug and external medium. S.K. Tam and al. have shown (in Vandamme et al Microencapsulation; Tec & Doc; 2007; Chapter 11) these issues when the microencapsulation aims to allow therapeutic effects through useful component exchanges, components which are able to cross the microencapsulation barriers while preserving drugs from being in direct contact with other potentially damaging components, if they had entered the microcapsule.

In case of oxidizable drugs, the issue is to be able to get microcapsules which are able to protect these drugs from oxidation, and to protect the external medium from component issued from oxidation of said drugs.

Drug encapsulation is usually made with monolayer coating, the quality of which is due mainly to the thickness of the encapsulation, i.e. the percentage of the mass of the oxidizable agent over the total mass of the microcapsule.

Formulations containing less than 50% of oxidizable agent occur frequently, some formulations containing oxidizable agents in percentages as low as 10%, due to this need of efficiency of the encapsulation.

Other microcapsules allow a very good ratio of oxidizable agent, up to 95% in mass, but with such a low ratio, the capsule performance is not as good as required in several applications. Different kinds of problems have to be solved:
- Oxidation of the oxidizable agent occurs during shelf life of capsules in liquid formulation. For example a loss of 30% to 40% of the oxidizable agent can occur in a beverage, after 30 days;
- Mechanical resistance needs also to be improved. For example, shear stress due to process like homogenization leads to partial destruction of the capsules. Thus part of the oxidizable agent is no more protected. Thus an increase of the resistance of the encapsulation is needed.
- Thermal resistance is also needed for some applications. For example pasteurization treatments, for instance a temperature of 75°C for 15 seconds can destroy part of the oxidizable agent.

Thus, one aim of the present invention is to provide microcapsules able to protect an active from oxidation by a given alimentary, cosmetically or pharmaceutically acceptable medium in which said microcapsules are placed.

Another aim of the present invention is to provide microcapsules able to protect an active from oxidation by a given alimentary, cosmetically or pharmaceutically acceptable medium in which said microcapsules are placed, said microcapsules having a high content of active, from 50% up to 95%, in particular up to 99.5% in mass.

Another aim of the present invention is to provide microcapsules able to protect the alimentary, cosmetically or pharmaceutically acceptable medium in which said microcapsules are placed from the active contained in said microcapsules.

Thus, the present invention relates to a microcapsule consisting in or containing:
- a core consisting in or comprising an oxidizable active (OA),
   said core being optionally surrounded by a precoating consisting in or comprising an antioxidant compound X,
   said core, optionally surrounded by a precoating consisting in or comprising said antioxidant compound X, being optionally surrounded by a coating consisting in or comprising a water insoluble compound,
- a first layer surrounding the core by either:
   - a water soluble or organic solvent, in particular ethanol, soluble encapsulating agent (EA 1), or
   - means for inducing water insolubility of said encapsulating agent (MII 1),
- a second layer surrounding the first layer by:
   - a water soluble or organic solvent, in particular ethanol, soluble encapsulating agent (EA 1) when the first layer is means for inducing water insolubility of said encapsulating agent,
   - means for inducing water insolubility of a water soluble or organic solvent, in particular ethanol, soluble encapsulating agent (MII 1) when the first layer is said encapsulating agent,
      the first or the second layer from the core optionally comprising further an antioxidant compound Y,
      and
- an alternation of n layers of water soluble or organic solvent, in particular ethanol, soluble encapsulating agents (EA 2) and of m layers of means for inducing water insolubility of said encapsulating agents (MII 2), surrounding the second layer, starting with a layer of the same nature as the nature of the first one,
   m being equal to 1, 2, 3, 4, 5, 6, 7, 8, 9 or 10,
   n = m, when the first layer is said EA 1, or n = m - 1, when the first layer is said MII 1, the last layer being MII 2,
   each EA 2 being preceded and/or followed by means for inducing water insolubility (MII 2) of said EA2,
   with the proviso that:
   when the first layer is MII 1 and the second layer is EA 1, and when m is equal to 1, then MII 2 are means to induce water insolubility of EA 1.

Said microcapsules contain (2 + m + n) layers of encapsulating agent (EA) and means of inducing water insolubility (MII), in other words:
- 2m + 2 layers, when the first layer is a EA 1, and
- 2m + 1 layers, when the first layer is MII 1.

Consequently, said microcapsules contain (2 + m + n) alternate layers of EA and MII.

Said microcapsules contain optionally a further precoating consisting in or comprising an antioxidant compound X, and/or a further coating consisting in or comprising a water insoluble compound.

By "starting with a layer of the same nature as the nature of the first one", is meant that:
- said alternation of (m + n) layers starts with a water soluble or organic solvent-soluble encapsulating agent (EA 2) when the first layer from the core is a water soluble or organic solvent-soluble encapsulating agent (EA 1);
- said alternation of (m + n) layers starts with means for inducing water insolubility (MII 2) when the first layer from the core is means for inducing water insolubility (MII 1).

By "alternation" is meant a group of (n + m) layers wherein layers of EA2 alternate with layers of MII 2, starting with a layer as described above, and finishing with a layer of MII 2.

In an advantageous embodiment the present invention relates to a microcapsule consisting in or containing:
- a core consisting in or comprising an oxidizable active (OA),
   said core being optionally surrounded by a precoating consisting in or comprising an antioxidant compound X,
- a first layer surrounding the core by either:
   - a water soluble or organic solvent, in particular ethanol, soluble encapsulating agent (EA 1), or
   - means for inducing water insolubility of said encapsulating agent (MII 1),
- a second layer surrounding the first layer by:
   - a water soluble or organic solvent, in particular ethanol, soluble encapsulating agent (EA 1) when the first layer is means for inducing water insolubility of said encapsulating agent,
   - means for inducing water insolubility of a water soluble or organic solvent, in particular ethanol, soluble encapsulating agent (MII 1) when the first layer is said encapsulating agent,
   the first or the second layer from the core optionally comprising further an antioxidant compound Y,
   and
- an alternation of n layers of said EA 1 and of m layers of said MII 1, surrounding the second layer, starting with a layer of the same nature as the nature of the first one,
   m being equal to 1, 2, 3, 4, 5, 6, 7, 8, 9 or 10,
   n = m, when the first layer is said EA 1, or n = m - 1, when the first layer is said MII 1, the last layer being MII 1.

In an advantageous embodiment the present invention relates to a microcapsule consisting in or containing:
- a core consisting in or comprising an oxidizable active (OA),
   said core being optionally surrounded by a precoating consisting in or comprising an antioxidant compound X,
   said core, optionally surrounded by a precoating consisting in or comprising said antioxidant compound X, being surrounded by a coating consisting in or comprising a water insoluble compound,
- a first layer surrounding the core by either:
   - a water soluble or organic solvent, in particular ethanol, soluble encapsulating agent (EA 1), or
   - means for inducing water insolubility of said encapsulating agent (MII 1),
- a second layer surrounding the first layer by:
   - a water soluble or organic solvent, in particular ethanol, soluble encapsulating agent (EA 1) when the first layer is means for inducing water insolubility of said encapsulating agent,
   - means for inducing water insolubility of a water soluble or organic solvent, in particular ethanol, soluble encapsulating agent (MII 1) when the first layer is said encapsulating agent,
      the first or the second layer from the core optionally comprising further an antioxidant compound Y,
      and
- an alternation of n layers of said EA 1 and of m layers of said MII 1, surrounding the second layer, starting with a layer of the same nature as the nature of the first one,
   m being equal to 1, 2, 3, 4, 5, 6, 7, 8, 9 or 10,
   n = m, when the first layer is said EA 1, or n = m - 1, when the first layer is said MII 1, the last layer being MII 1.

By "water insoluble compound" is meant a compound that is sufficiently insoluble in water to form a turbid solution to the naked eye at a concentration of 1 to 5% in weight in water at 25°C.

Said water insoluble compound is soluble in an organic solvent.

By "organic solvent-soluble compound" is meant a compound that is sufficiently soluble in an organic solvent, in particular ethanol, to form a clear solution to the naked eye at a concentration of 5% in weight in said organic solvent at 25°C.

Said water insoluble compound is in particular selected from cellulose polymers, for example ethylcellulose.

In an advantageous embodiment, the present invention relates to a microcapsule wherein:
- the EA 2 of said n layers are identical,
- the MII 2 of said m layers are identical,
- EA 1 is not identical to said EA 2, and/or MII 1 are not identical to said MII 2.

In an advantageous embodiment, the present invention relates to a microcapsule wherein:
- the EA 2 of said n layers are not identical, and/or
- the MII 2 of said m layers are not identical,
each EA 2 being preceded and/or followed by means for inducing water insolubility (MII 2) of said EA2.

The EA 1 and the MII 1 of said first and second layers can be respectively identical to or different from the EA 2 and the MII 2 of said alternation of (m + n) layers.

Five cases can be distinguished:
- in the first case, all the EA are identical and all the MII are identical;
- when the EA and the MII of said first and second layers (EA 1 and MII 1) are respectively different from the EA and the MII of said alternation of m+n layers (EA 2 and MII 2):
   o when the first layer is MII 1 and second layer is EA 1, the first MII 2 from the core are not means to induce water insolubility of EA 1 (second case),
   o when the first layer is EA 1 and the second layer is MII 1, MII 1 are not means to induce water insolubility of the first EA 2 from the core (third case);
   o when the first layer is MII 1 and second layer is EA 1, the first MII 2 from the core are means to induce water insolubility of EA 1 (fourth case),
   o when the first layer is EA 1 and the second layer is MII 1, MII 1 are means to induce water insolubility of the first EA 2 from the core (fifth case).

At the interface between the first and the second layers, EA 1 is made insoluble by MII 1, forming a water insoluble coating at said interface.

Regarding said alternation, when all EA 2 are identical and all MII 2 are identical, at the (m + n -1) interfaces between EA 2 and MII 2, EA 2 is made insoluble by MII 2, forming a water insoluble coating at said interface.

Regarding said alternation, when all EA 2 are not identical and/or all MII 2 are not identical, there at least n interfaces between a EA 2 and MII 2, said EA 2 being made insoluble by said MII 2, forming a water insoluble coating at said interface.

When all EA 2 are identical and all MII 2 are identical, five cases can be distinguished concerning the number of water insoluble coatings of said microcapsules:
- first case: when all the EA are identical and all the MII are identical, the number of insoluble coating is (m + n +1), or
- when the EA and the MII of said first and second layers (EA 1 and MII 1) are respectively different from the EA and the MII of said alternation of m+n layers (EA 2 and MII 2), and:
   o when the first layer is MII 1 and second layer is EA 1, and MII 2 are not means to induce water insolubility of EA 1, the number of insoluble coating is (m + n) (second case), or
   o when the first layer is EA 1 and the second layer is MII 1, and MII 1 are not means to induce water insolubility of EA 2, the number of insoluble coating is (m + n), (m + n) being in that case different from 1 (third case), or
   o when the first layer is MII 1 and second layer is EA 1, and MII are means to induce water insolubility of EA 1, the number of insoluble coating is (m + n + 1) (fourth case), or
   o when the first layer is EA 1 and the second layer is MII 1, and MII 1 are means to induce water insolubility of EA 2, the number of insoluble coating is (m + n +1) (fifth case).

Said microcapsules contain optionally a further coating consisting in or comprising a water insoluble compound.

When the first layer is MII 1 and the second layer is EA 1, and when m is equal to 1, then MII 2 are means to induce water insolubility of EA 1. In that case, the number of insoluble coatings is 2: the first one between MII 1 and EA 1, and the second one between EA1 and MII 2.

In all cases, the minimum number of insoluble coatings is 2: the first one between MII 1 and EA 1, and the second one between EA1 and MII 2, or between an EA2 and the corresponding means for inducing water insolubility (MII 2) of said EA2.

By microcapsule is meant a particle with a size from 1 µm to a 3 mm, comprising one or more coating isolating an encapsulated core from the external medium.

By core is meant the material surrounded by the first layer.

By coatings is meant the walls surrounding the core of said microcapsule.

By "water insoluble coatings" is meant the coatings of said microcapsule, the water solubility of which is low enough to prevent said active to be released from the microcapsule, when said microcapsule is placed in an aqueous-based alimentary, cosmetically or pharmaceutically acceptable medium.

The insolubilization of a microcapsule, and thus the fact that said coatings prevent said active to be released from said microcapsule is for example determined by the measurement of particle size in water, for instance with a laser particle sizer.

By "prevent said active to be released from the microcapsule" is meant that, when said microcapsule is placed in said medium, the concentration of active in the medium surrounding said microcapsule is below 5% in weight at 25°C, in particular below 1% in weight at 25°C.

By "oxidizable active" is meant an active that is capable of being oxidized.

By "active being oxidized" is meant a reducing agent oxidized by having its electrons taken away.

The tendency of an active of having its electrons taken away and thereby be oxidized is in particular measured by its redox potential, as known by those skilled in the art: an active is likely to be oxidized by an element of the external medium if the redox potential of said element is superior to the redox potential of said active.

By "encapsulation agent" is meant a water soluble or organic solvent-soluble agent forming a water insoluble coating after a modification of its chemical state.

By "water soluble or organic solvent-soluble EA" is meant an EA that is sufficiently soluble in water or in an organic solvent, in particular ethanol, to form a clear solution to the naked eye at a concentration of 5% in weight in respectively water or said organic solvent at 25°C.

In an advantageous embodiment, the present invention relates to a microcapsule wherein said EA is water soluble.

In an advantageous embodiment, the present invention relates to a microcapsule wherein said EA is organic solvent-soluble, in particular ethanol soluble.

Two cases can thus be distinguished regarding said water soluble or organic solvent-soluble agent:
- the first one corresponds to a water soluble agent forming said water insoluble coating after a modification of its chemical state;
- the second one corresponds to a water soluble and organic solvent, in particular ethanol, soluble agent forming said water insoluble coating after a modification of its chemical state.

The term "modification of its chemical state" means in particular a chemical reaction or a pH modification.

In an advantageous embodiment, the present invention relates to a microcapsule wherein said EA is an agent, the water solubility of which is pH-dependent.

By "an agent, the water solubility of which is pH-dependent" is meant that there is at least one pH value for which said agent is water soluble and at least one pH value for which said agent is water insoluble.

By "means for inducing water insolubility" is meant any means that modify the chemical state of said water soluble or organic solvent-soluble EA, providing a species that is water insoluble in standard reference conditions of temperature and pressure corresponding to a temperature of 25°C and a pressure of 100KPa.

By "water insoluble" is meant a species that is sufficiently insoluble in water to form a turbid solution to the naked eye at a concentration of 1 to 5% in weight in water at 25°C.

In an advantageous embodiment, the present invention relates to a microcapsule wherein said means for inducing water insolubility are an agent chemically reacting with said EA.

Said means react with said water soluble or organic solvent-soluble EA, providing a water insoluble species.

In an advantageous embodiment, the present invention relates to a microcapsule wherein said means for inducing water insolubility are an acid, a base, or a buffer.

Said acid, base, of buffer brings the pH from a value for which said EA is water soluble to a value for which said EA is water insoluble.

Said antioxidants X and Y are in particular selected independently from each other from the group comprising sodium ascorbate, ascorbyl palmitate, vitamin E, tocopherol acetate, superoxydismutase (SOD), polyphenols and mixtures thereof, in particular a mixture of ascorbyl palmitate and tocopherol acetate.

In an advantageous embodiment, the present invention relates to a microcapsule, wherein the inner part of said core contains the oxidizable active (OA), said OA being in a liquid form, in particular in an oily form, or in a viscous oil form, or in a pasty form.

In a particularly advantageous embodiment, the present invention relates to a microcapsule, wherein said inner part of said core is a solid comprising the OA in a liquid form, in particular in an oily form, or in a viscous oil form, or in a pasty form.

In an advantageous embodiment, the present invention relates to a microcapsule consisting in or containing:
- a core consisting in or comprising an oxidizable active (OA), the outer part of said core being in a solid form,
   said core being optionally surrounded by a precoating consisting in or comprising an antioxidant compound X,
   said core, optionally surrounded by a precoating consisting in or comprising said antioxidant compound X, being optionally surrounded by a coating consisting in or comprising a water insoluble compound,
- a first layer surrounding the core by either:
   - a water soluble or organic solvent, in particular ethanol, soluble encapsulating agent (EA 1), or
   - means for inducing water insolubility of said encapsulating agent (MII 1),
- a second layer surrounding the first layer by:
   - a water soluble or organic solvent, in particular ethanol, soluble encapsulating agent (EA 1) when the first layer is means for inducing water insolubility of said encapsulating agent,
   - means for inducing water insolubility of an water soluble or organic solvent, in particular ethanol, soluble encapsulating agent (MII 1) when the first layer is said encapsulating agent,
      the first or the second layer from the core optionally comprising further an antioxidant compound Y,
      and
- an alternation of n layers of water soluble or organic solvent, in particular ethanol, soluble encapsulating agents (EA 2) and of m layers of means for inducing water insolubility of said encapsulating agents (MII 2), surrounding the second layer, starting with a layer of the same nature as the nature of the first one,
   m being equal to 1, 2, 3, 4, 5, 6, 7, 8, 9 or 10,
   n = m, when the first layer is said EA 1, or n = m - 1, when the first layer is said MII 1, the last layer being MII 2,
   with the proviso that:
   when the first layer is MII 1 and the second layer is EA 1, and when m is equal to 1, then MII 2 are means to induce water insolubility of EA 1.

By "outer part" is meant the part of said core which is in contact with said first layer.

By "solid form" is meant a crystalline, semi-crystalline or amorphous state.

In an advantageous embodiment, the present invention relates to a microcapsule, wherein said core is under solid form.

In a particularly advantageous embodiment, the present invention relates to a microcapsule, wherein said core is crystalline. In this case, said oxidizable active is necessarily crystalline.

In another particularly advantageous embodiment, the present invention relates to a microcapsule, wherein said core is crystalline and solid, i.e. without any space or air cavities.

In another particularly advantageous embodiment, the present invention relates to a microcapsule, wherein said core is crystalline and contains at least one space or air cavity.

In another particularly advantageous embodiment, the present invention relates to a microcapsule, wherein said core is crystalline and has a water content less than 10%, in particular less than 6%, by weight.

In another particularly advantageous embodiment, the present invention relates to a microcapsule, wherein said core is under solid form and amorphous.

In another particularly advantageous embodiment, the present invention relates to a microcapsule, wherein said core is amorphous and contains at least one space or air cavity, said core being in particular obtained by spray drying.

In another particularly advantageous embodiment, the present invention relates to a microcapsule, wherein said core is amorphous and has a water content less than 10%, in particular less than 6%, by weight.

In an advantageous embodiment, the present invention relates to a microcapsule consisting in or containing:
- a core consisting in or comprising an oxidizable active (OA),
   said core being optionally surrounded by a precoating consisting in or comprising an antioxidant compound X,
   said core, optionally surrounded by a precoating consisting in or comprising said antioxidant compound X, being optionally surrounded by a coating consisting in or comprising a water insoluble compound,
- a first layer, which is free of proteins, surrounding the core by either:
   - a water soluble or organic solvent, in particular ethanol, soluble encapsulating agent (EA 1), or
   - means for inducing water insolubility of said encapsulating agent (MII 1),
- a second layer, which is free of proteins, surrounding the first layer by:
   - a water soluble or organic solvent, in particular ethanol, soluble encapsulating agent (EA 1) when the first layer is means for inducing water insolubility of said encapsulating agent,
   - means for inducing water insolubility of an water soluble or organic solvent, in particular ethanol, soluble encapsulating agent (MII 1) when the first layer is said encapsulating agent,
      the first or the second layer from the core optionally comprising further an antioxidant compound Y,
      and
- an alternation of n layers of water soluble or organic solvent, in particular ethanol, soluble encapsulating agents (EA 2) and of m layers of means for inducing water insolubility of said encapsulating agents (MII 2), surrounding the second layer, starting with a layer of the same nature as the nature of the first one,
   m being equal to 1, 2, 3, 4, 5, 6, 7, 8, 9 or 10,
   n = m, when the first layer is said EA 1, or n = m - 1, when the first layer is said MII 1, the last layer being MII 2,
   with the proviso that:
   when the first layer is MII 1 and the second layer is EA 1, and when m is equal to 1, then MII 2 are means to induce water insolubility of EA 1.

In an advantageous embodiment, the present invention relates to a microcapsule consisting in or containing:
- a core consisting in or comprising an oxidizable active (OA), the outer part of said core being in a solid form,
   said core being optionally surrounded by a precoating consisting in or comprising an antioxidant compound X,
   said core, optionally surrounded by a precoating consisting in or comprising said antioxidant compound X, being optionally surrounded by a coating consisting in or comprising a water insoluble compound,
- a first layer, which is free of proteins, surrounding the core by either:
   - a water soluble or organic solvent, in particular ethanol, soluble encapsulating agent (EA 1), or
   - means for inducing water insolubility of said encapsulating agent (MII 1),
- a second layer, which is free of proteins, surrounding the first layer by:
   - a water soluble or organic solvent, in particular ethanol, soluble encapsulating agent (EA 1) when the first layer is means for inducing water insolubility of said encapsulating agent,
   - means for inducing water insolubility of an water soluble or organic solvent, in particular ethanol, soluble encapsulating agent (MII 1) when the first layer is said encapsulating agent,
      the first or the second layer from the core optionally comprising further an antioxidant compound Y,
      and
- an alternation of n layers of water soluble or organic solvent, in particular ethanol, soluble encapsulating agents (EA 2) and of m layers of means for inducing water insolubility of said encapsulating agents (MII 2), surrounding the second layer, starting with a layer of the same nature as the nature of the first one,
   m being equal to 1, 2, 3, 4, 5, 6, 7, 8, 9 or 10,
   n = m, when the first layer is said EA 1, or n = m - 1, when the first layer is said MII 1,
   the last layer being MII 2,
   with the proviso that:
   when the first layer is MII 1 and the second layer is EA 1, and when m is equal to 1, then MII 2 are means to induce water insolubility of EA 1.

In an advantageous embodiment, the present invention relates to a microcapsule consisting in or containing:
- a core consisting in or comprising an oxidizable active (OA),
   said core being optionally surrounded by a precoating consisting in or comprising an antioxidant compound X,
   said core, optionally surrounded by a precoating consisting in or comprising said antioxidant compound X, being surrounded by a coating consisting in or comprising a water insoluble compound,
- a first layer surrounding the core by either:
   - a water soluble or organic solvent, in particular ethanol, soluble encapsulating agent (EA 1), or
   - means for inducing water insolubility of said encapsulating agent (MII 1),
- a second layer surrounding the first layer by:
   - a water soluble or organic solvent, in particular ethanol, soluble encapsulating agent (EA 1) when the first layer is means for inducing water insolubility of said encapsulating agent,
   - means for inducing water insolubility of a water soluble or organic solvent, in particular ethanol, soluble encapsulating agent (MII 1) when the first layer is said encapsulating agent,
      the first or the second layer from the core optionally comprising further an antioxidant compound Y,
      and
- an alternation of n layers of water soluble or organic solvent, in particular ethanol, soluble encapsulating agents (EA 2) and of m layers of means for inducing water insolubility of said encapsulating agents (MII 2), surrounding the second layer, starting with a layer of the same nature as the nature of the first one,
   m being equal to 1, 2, 3, 4, 5, 6, 7, 8, 9 or 10,
   n = m, when the first layer is said EA 1, or n = m - 1, when the first layer is said MII 1,
   the last layer being MII 2,
   each EA 2 being preceded and/or followed by means for inducing water insolubility (MII 2) of said EA2,
   with the proviso that:
   when the first layer is MII 1 and the second layer is EA 1, and when m is equal to 1, then MII 2 are means to induce water insolubility of EA 1.

In an advantageous embodiment, the present invention relates to a microcapsule consisting in or containing:
- a core consisting in or comprising an oxidizable active (OA),
   said core being optionally surrounded by a precoating consisting in or comprising an antioxidant compound X,
- a first layer surrounding the core by either:
   - a water soluble or organic solvent, in particular ethanol, soluble encapsulating agent (EA 1), or
   - means for inducing water insolubility of said encapsulating agent (MII 1),
- a second layer surrounding the first layer by:
   - a water soluble or organic solvent, in particular ethanol, soluble encapsulating agent (EA 1) when the first layer is means for inducing water insolubility of said encapsulating agent,
   - means for inducing water insolubility of a water soluble or organic solvent, in particular ethanol, soluble encapsulating agent (MII 1) when the first layer is said encapsulating agent,
      the first or the second layer from the core optionally comprising further an antioxidant compound Y,
      and
- an alternation of n layers of water soluble or organic solvent, in particular ethanol, soluble encapsulating agents (EA 2) and of m layers of means for inducing water insolubility of said encapsulating agents (MII 2), surrounding the second layer, starting with a layer of the same nature as the nature of the first one,
   m being equal to 1, 2, 3, 4, 5, 6, 7, 8, 9 or 10,
   n = m, when the first layer is said EA 1, or n = m - 1, when the first layer is said MII 1, the last layer being MII 2,
   each EA 2 being preceded and/or followed by means for inducing water insolubility (MII 2) of said EA2,
   with the proviso that:
   when the first layer is MII 1 and the second layer is EA 1, and when m is equal to 1, then MII 2 are means to induce water insolubility of EA 1.

In an advantageous embodiment, the present invention relates to a microcapsule consisting in or containing:
- a core consisting in or comprising an oxidizable active (OA),
   said core being surrounded by a precoating consisting in or comprising an antioxidant compound X,
   said core, surrounded by a precoating consisting in or comprising said antioxidant compound X, being optionally surrounded by a coating consisting in or comprising a water insoluble compound,
- a first layer surrounding the core by either:
   - a water soluble or organic solvent, in particular ethanol, soluble encapsulating agent (EA 1), or
   - means for inducing water insolubility of said encapsulating agent (MII 1),
- a second layer surrounding the first layer by:
   - a water soluble or organic solvent, in particular ethanol, soluble encapsulating agent (EA 1) when the first layer is means for inducing water insolubility of said encapsulating agent,
   - means for inducing water insolubility of a water soluble or organic solvent, in particular ethanol, soluble encapsulating agent (MII 1) when the first layer is said encapsulating agent,
      the first or the second layer from the core optionally comprising further an antioxidant compound Y,
      and
- an alternation of n layers of water soluble or organic solvent, in particular ethanol, soluble encapsulating agents (EA 2) and of m layers of means for inducing water insolubility of said encapsulating agents (MII 2), surrounding the second layer, starting with a layer of the same nature as the nature of the first one,
   m being equal to 1, 2, 3, 4, 5, 6, 7, 8, 9 or 10,
   n = m, when the first layer is said EA 1, or n = m - 1, when the first layer is said MII 1, the last layer being MII 2,
   each EA 2 being preceded and/or followed by means for inducing water insolubility (MII 2) of said EA2,
   with the proviso that:
   when the first layer is MII 1 and the second layer is EA 1, and when m is equal to 1, then MII 2 are means to induce water insolubility of EA 1.

In an advantageous embodiment, the present invention relates to a microcapsule consisting in or containing:
- a core consisting in or comprising an oxidizable active (OA),
   said core being optionally surrounded by a coating consisting in or comprising a water insoluble compound,
- a first layer surrounding the core by either:
   - a water soluble or organic solvent, in particular ethanol, soluble encapsulating agent (EA 1), or
   - means for inducing water insolubility of said encapsulating agent (MII 1),
- a second layer surrounding the first layer by:
   - a water soluble or organic solvent, in particular ethanol, soluble encapsulating agent (EA 1) when the first layer is means for inducing water insolubility of said encapsulating agent,
   - means for inducing water insolubility of a water soluble or organic solvent, in particular ethanol, soluble encapsulating agent (MII 1) when the first layer is said encapsulating agent,
      the first or the second layer from the core optionally comprising further an antioxidant compound Y,
      and
- an alternation of n layers of water soluble or organic solvent, in particular ethanol, soluble encapsulating agents (EA 2) and of m layers of means for inducing water insolubility of said encapsulating agents (MII 2), surrounding the second layer, starting with a layer of the same nature as the nature of the first one,
   m being equal to 1, 2, 3, 4, 5, 6, 7, 8, 9 or 10,
   n = m, when the first layer is said EA 1, or n = m - 1, when the first layer is said MII 1, the last layer being MII 2,
   each EA 2 being preceded and/or followed by means for inducing water insolubility (MII 2) of said EA2,
   with the proviso that:
   when the first layer is MII 1 and the second layer is EA 1, and when m is equal to 1, then MII 2 are means to induce water insolubility of EA 1.

In an advantageous embodiment, the present invention relates to a microcapsule consisting in or containing:
- a core consisting in or comprising an oxidizable active (OA),
   said core being optionally surrounded by a precoating consisting in or comprising an antioxidant compound X,
   said core, optionally surrounded by a precoating consisting in or comprising said antioxidant compound X, being optionally surrounded by a coating consisting in or comprising a water insoluble compound,
- a first layer surrounding the core by either:
   - a water soluble or organic solvent, in particular ethanol, soluble encapsulating agent (EA 1), or
   - means for inducing water insolubility of said encapsulating agent (MII 1),
- a second layer surrounding the first layer by:
   - a water soluble or organic solvent, in particular ethanol, soluble encapsulating agent (EA 1) when the first layer is means for inducing water insolubility of said encapsulating agent,
   - means for inducing water insolubility of a water soluble or organic solvent, in particular ethanol, soluble encapsulating agent (MII 1) when the first layer is said encapsulating agent,
      the first or the second layer from the core comprising further an antioxidant compound Y,
      and
- an alternation of n layers of water soluble or organic solvent, in particular ethanol, soluble encapsulating agents (EA 2) and of m layers of means for inducing water insolubility of said encapsulating agents (MII 2), surrounding the second layer, starting with a layer of the same nature as the nature of the first one,
   m being equal to 1, 2, 3, 4, 5, 6, 7, 8, 9 or 10,
   n = m, when the first layer is said EA 1, or n = m - 1, when the first layer is said MII 1, the last layer being MII 2,
   each EA 2 being preceded and/or followed by means for inducing water insolubility (MII 2) of said EA2,
   with the proviso that:
   when the first layer is MII 1 and the second layer is EA 1, and when m is equal to 1, then MII 2 are means to induce water insolubility of EA 1.

In an advantageous embodiment, the present invention relates to a microcapsule consisting in or containing:
- a core consisting in or comprising an oxidizable active (OA),
   said core being optionally surrounded by a precoating consisting in or comprising an antioxidant compound X,
   said core, optionally surrounded by a precoating consisting in or comprising said antioxidant compound X, being optionally surrounded by a coating consisting in or comprising a water insoluble compound,
- a first layer surrounding the core by either:
   - a water soluble or organic solvent, in particular ethanol, soluble encapsulating agent (EA 1), or
   - means for inducing water insolubility of said encapsulating agent (MII 1),
- a second layer surrounding the first layer by:
   - a water soluble or organic solvent, in particular ethanol, soluble encapsulating agent (EA 1) when the first layer is means for inducing water insolubility of said encapsulating agent,
   - means for inducing water insolubility of a water soluble or organic solvent, in particular ethanol, soluble encapsulating agent (MII 1) when the first layer is said encapsulating agent,
      and
- an alternation of n layers of water soluble or organic solvent, in particular ethanol, soluble encapsulating agents (EA 2) and of m layers of means for inducing water insolubility of said encapsulating agents (MII 2), surrounding the second layer, starting with a layer of the same nature as the nature of the first one,
   m being equal to 1, 2, 3, 4, 5, 6, 7, 8, 9 or 10,
   n = m, when the first layer is said EA 1, or n = m - 1, when the first layer is said MII 1,
   the last layer being MII 2,
   each EA 2 being preceded and/or followed by means for inducing water insolubility (MII 2) of said EA2,
   with the proviso that:
   when the first layer is MII 1 and the second layer is EA 1, and when m is equal to 1, then MII 2 are means to induce water insolubility of EA 1.

In an advantageous embodiment, the present invention relates to a microcapsule consisting in or containing:
- a core consisting in or comprising an oxidizable active (OA),
   said core being surrounded by a precoating consisting in or comprising an antioxidant compound X,
   said core, surrounded by a precoating consisting in or comprising said antioxidant compound X, being optionally surrounded by a coating consisting in or comprising a water insoluble compound,
- a first layer surrounding the core by either:
   - a water soluble or organic solvent, in particular ethanol, soluble encapsulating agent (EA 1), or
   - means for inducing water insolubility of said encapsulating agent (MII 1),
- a second layer surrounding the first layer by:
   - a water soluble or organic solvent, in particular ethanol, soluble encapsulating agent (EA 1) when the first layer is means for inducing water insolubility of said encapsulating agent,
   - means for inducing water insolubility of a water soluble or organic solvent, in particular ethanol, soluble encapsulating agent (MII 1) when the first layer is said encapsulating agent,
      the first or the second layer from the core comprising further an antioxidant compound Y,
      and
- an alternation of n layers of water soluble or organic solvent, in particular ethanol, soluble encapsulating agents (EA 2) and of m layers of means for inducing water insolubility of said encapsulating agents (MII 2), surrounding the second layer, starting with a layer of the same nature as the nature of the first one,
   m being equal to 1, 2, 3, 4, 5, 6, 7, 8, 9 or 10,
   n = m, when the first layer is said EA 1, or n = m - 1, when the first layer is said MII 1,
   the last layer being MII 2,
   each EA 2 being preceded and/or followed by means for inducing water insolubility (MII 2) of said EA2,
   with the proviso that:
   when the first layer is MII 1 and the second layer is EA 1, and when m is equal to 1, then MII 2 are means to induce water insolubility of EA 1.

In an advantageous embodiment, the present invention relates to a microcapsule consisting in or containing:
- a core consisting in or comprising an oxidizable active (OA),
   said core being optionally surrounded by a coating consisting in or comprising a water insoluble compound,
- a first layer surrounding the core by either:
   - a water soluble or organic solvent, in particular ethanol, soluble encapsulating agent (EA 1), or
   - means for inducing water insolubility of said encapsulating agent (MII 1),
- a second layer surrounding the first layer by:
   - a water soluble or organic solvent, in particular ethanol, soluble encapsulating agent (EA 1) when the first layer is means for inducing water insolubility of said encapsulating agent,
   - means for inducing water insolubility of a water soluble or organic solvent, in particular ethanol, soluble encapsulating agent (MII 1) when the first layer is said encapsulating agent,
      and
- an alternation of n layers of water soluble or organic solvent, in particular ethanol, soluble encapsulating agents (EA 2) and of m layers of means for inducing water insolubility of said encapsulating agents (MII 2), surrounding the second layer, starting with a layer of the same nature as the nature of the first one,
   m being equal to 1, 2, 3, 4, 5, 6, 7, 8, 9 or 10,
   n = m, when the first layer is said EA 1, or n = m - 1, when the first layer is said MII 1,
   the last layer being MII 2,
   each EA 2 being preceded and/or followed by means for inducing water insolubility (MII 2) of said EA2,
   with the proviso that:
   when the first layer is MII 1 and the second layer is EA 1, and when m is equal to 1, then MII 2 are means to induce water insolubility of EA 1.

In an advantageous embodiment, the present invention relates to a microcapsule consisting in or containing:
- a core consisting in or comprising an oxidizable active (OA),
   said core being surrounded by a precoating consisting in or comprising an antioxidant compound X,
   said core, surrounded by a precoating consisting in or comprising said antioxidant compound X, being surrounded by a coating consisting in or comprising a water insoluble compound,
- a first layer surrounding the core by either:
   - a water soluble or organic solvent, in particular ethanol, soluble encapsulating agent (EA 1), or
   - means for inducing water insolubility of said encapsulating agent (MII 1),
- a second layer surrounding the first layer by:
   - a water soluble or organic solvent, in particular ethanol, soluble encapsulating agent (EA 1) when the first layer is means for inducing water insolubility of said encapsulating agent,
   - means for inducing water insolubility of a water soluble or organic solvent, in particular ethanol, soluble encapsulating agent (MII 1) when the first layer is said encapsulating agent,
   the first or the second layer from the core comprising further an antioxidant compound Y,
   and
- an alternation of n layers of water soluble or organic solvent, in particular ethanol, soluble encapsulating agents (EA 2) and of m layers of means for inducing water insolubility of said encapsulating agents (MII 2), surrounding the second layer, starting with a layer of the same nature as the nature of the first one,
   m being equal to 1, 2, 3, 4, 5, 6, 7, 8, 9 or 10,
   n = m, when the first layer is said EA 1, or n = m - 1, when the first layer is said MII 1, the last layer being MII 2,
   each EA 2 being preceded and/or followed by means for inducing water insolubility (MII 2) of said EA2,
   with the proviso that:
   when the first layer is MII 1 and the second layer is EA 1, and when m is equal to 1, then MII 2 are means to induce water insolubility of EA 1.

In an advantageous embodiment, the present invention relates to a microcapsule consisting in or containing:
- a core consisting in or comprising an oxidizable active (OA),
- a first layer surrounding the core by either:
   - a water soluble or organic solvent, in particular ethanol, soluble encapsulating agent (EA 1), or
   - means for inducing water insolubility of said encapsulating agent (MII 1),
- a second layer surrounding the first layer by:
   - a water soluble or organic solvent, in particular ethanol, soluble encapsulating agent (EA 1) when the first layer is means for inducing water insolubility of said encapsulating agent,
   - means for inducing water insolubility of a water soluble or organic solvent, in particular ethanol, soluble encapsulating agent (MII 1) when the first layer is said encapsulating agent,
   and
- an alternation of n layers of water soluble or organic solvent, in particular ethanol, soluble encapsulating agents (EA 2) and of m layers of means for inducing water insolubility of said encapsulating agents (MII 2), surrounding the second layer, starting with a layer of the same nature as the nature of the first one,
   m being equal to 1, 2, 3, 4, 5, 6, 7, 8, 9 or 10,
   n = m, when the first layer is said EA 1, or n = m - 1, when the first layer is said MII 1, the last layer being MII 2,
   each EA 2 being preceded and/or followed by means for inducing water insolubility (MII 2) of said EA2,
   with the proviso that:
   when the first layer is MII 1 and the second layer is EA 1, and when m is equal to 1, then MII 2 are means to induce water insolubility of EA 1.

In an advantageous embodiment, the present invention relates to a microcapsule, said microcapsule being placed in an external medium that do not comprise said OA.

In an advantageous embodiment, the present invention relates to a microcapsule, said microcapsule being placed in an external medium that do not comprise vitamin C or a chemical derivative of vitamin C.

In an advantageous embodiment, the present invention relates to a microcapsule comprising less than 10%, in particular less than 6%, in weight of water.

In an advantageous embodiment, the present invention relates to a microcapsule wherein:
- said means for inducing water insolubility are an agent chemically reacting with said EA, or
- said means for inducing water insolubility are an acid, a base, or a buffer.

In an advantageous embodiment, the present invention relates to a microcapsule wherein said layers are such that, when said microcapsule is placed in an alimentary, cosmetically or pharmaceutically acceptable medium:
- said OA is not degraded by element(s) of said medium, and
- said element(s) of the medium is (are) not degraded by said OA.

By "OA not degraded by element(s)", it means that the OA is not oxidized or modified by oxidation, in presence of element(s) of said medium.

Said degradation can be measured by standard analytical method such as HPLC, for example HPLC ascorbic acid dosage when said OA is vitamin C.

By "element(s) of the medium is (are) not degraded by said OA", it means that the element(s) is (are) not directly degraded by said OA, or degraded by product(s) issued from oxidative reactions involving said OA.

The degradation of a given medium is measured according to criteria known by those skilled in the art.

For example, when said OA is ascorbic acid, a medium containing iron salts preferably under Fe²⁺ salt, would lead to the formation in the medium of iron ascorbate detectable with its specific black color.

In an advantageous embodiment, the present invention relates to a microcapsule wherein said layers are such that, when said microcapsule is placed in a fermented food composition, in particular in a fermented vegetal or dairy milk composition:
- said OA is not degraded by element(s) of said composition, and
- said element(s) of the composition is (are) not degraded by said OA,
provided said composition is not a fermented dairy food composition.

In an advantageous embodiment, the present invention relates to a microcapsule wherein said layers are such that, when said microcapsule is placed in an unfermented food composition, in particular in an unfermented dairy or an unfermented vegetal milk composition:
- said OA is not degraded by element(s) of said composition, and
- said element(s) of the composition is (are) not degraded by said OA.

In an advantageous embodiment, the present invention relates to a microcapsule wherein said layers are such that, when said microcapsule is placed in a alimentary, cosmetically or pharmaceutically acceptable medium comprising globular proteins, in particular a medium comprising or consisting in an unfermented dairy or vegetal milk composition and a medium comprising or consisting in a fermented dairy or vegetal milk compositions:
- said OA is not degraded by element(s) of said medium, and
- said element(s) of the medium is (are) not degraded by said OA.

In an advantageous embodiment, the present invention relates to a microcapsule wherein said layers are such that, when said microcapsule is placed in a alimentary, cosmetically or pharmaceutically acceptable medium comprising Ca²⁺ cations, in particular a medium comprising or consisting in an unfermented dairy vegetal milk composition and a medium comprising or consisting in a fermented dairy or vegetal milk compositions:
- said OA is not degraded by element(s) of said medium, and
- said element(s) of the medium is (are) not degraded by said OA.

In an advantageous embodiment, the present invention relates to a microcapsule wherein the mass of said OA is within the range from 40 to 99.5%, preferably from 60 to 98%, more preferably from 70 to 95%, of the total mass of said microcapsule.

In an advantageous embodiment, the present invention relates to a microcapsule wherein the mass of the first or second layer of EA 1 and of the n layers of EA 2 is within the range from 1 to 60%, preferably from 5 to 40%, more preferably from 10 to 20%, of the total mass of said microcapsule.

In an advantageous embodiment, the present invention relates to a microcapsule wherein the mass of the first or second layer of MII 1 and of the m layers of MII 2 is within the range from 0.1 to 5%, preferably from 0.2 to 3%, more preferably from 0.5 to 2.5%, of the total mass of said microcapsule.

In an advantageous embodiment, the present invention relates to a microcapsule wherein said microcapsule size is in range from 1 µm to 3 mm, preferably from 50 to 1000 µm, more preferably from 100 to 600 µm

Non-limiting examples of size are the ranges from 100 µm to 300 µm for a microcapsule wherein m is equal to 1, from 300 µm to 500 µm for a microcapsule wherein m is equal to 2, and from 500 µm to 1000 µm for a microcapsule wherein m is equal to 3.

In an advantageous embodiment, the present invention relates to a microcapsule wherein said OA is in a crystalline state.

By "crystalline state" is meant a state wherein OA molecules are arranged in an orderly, repeating pattern.

Examples of OA in a crystalline state are commercially available crystallized vitamins, such as crystallized vitamin C.

In an advantageous embodiment, the present invention relates to a microcapsule wherein said OA is in a crystalline state, in particular a microcapsule wherein said core consists in or comprises an OA in a crystalline state and at least one additional element selected among drying agents, antioxidant agents, filmogen agents and emulsifying agents.

Drying agents are for example starch, maltodextrin, proteins in particular caseinates, gelatin, vegetable proteins in particular soya, wheat and pea proteins, gums in particular acacia gum as well known by those skilled in the art.

Examples of antioxidant agents are sodium ascorbate, ascorbyl palmitate, vitamin E, tocopherol acetate, superoxydismutase (SOD), polyphenols and mixtures thereof, in particular a mixture of ascorbyl palmitate and tocopherol acetate.

Filmogen agents are for example proteins in particular caseinate, gums, cellulose derivatives as well known by those skilled in the art.

Examples of emulsifying agents are lecithin, proteins, in particular pea proteins and caseinates, more particularly sodium caseinate, hydrolyzed proteins, modified starch, as well known by those skilled in the art.

In an advantageous embodiment, the present invention relates to a microcapsule wherein said OA is in an amorphous state.

By "amorphous state" is meant a state wherein OA molecules are not arranged in an orderly, repeating pattern.

Compounds in an amorphous state are for instance described in Hancock et al. Journal of Pharmaceutical Sciences 1997, 86(1), pages 1-12.

Examples of OA in an amorphous state are OA amorphous solids obtained by spray-drying, under condition known by those skilled in the art: spray drying is known to produce predominately amorphous material from a homogenous solution, due to the almost instantaneous transition between liquid and solid phases.

It is noted that a microcapsule of the invention, wherein said OA is optionally in a crystalline or an amorphous state, can let small molecules such as protons and water pass through its layers when said microcapsule is placed in water or in an aqueous medium.

In an advantageous embodiment, the present invention relates to a microcapsule wherein said OA is water soluble.

When water from an external medium consisting in water or an aqueous medium passes through said layers in an amount enough to dissolve said water soluble OA, a microcapsule wherein said core consists in or contains a aqueous solution of said OA and said water insoluble coating is obtained. Such a microcapsule allows a better bioavailability compared to particles where said OA is in a solid form, as said water soluble OA is already dissolved in water.

In an advantageous embodiment, the present invention relates to a microcapsule wherein said OA is in an amorphous state, in particular a microcapsule wherein said core consists in or comprises an OA in an amorphous state and at least one additional element selected among drying agents, antioxidant agents, filmogen agents and emulsifying agents.

In an advantageous embodiment, the present invention relates to a microcapsule wherein said core consists in or comprises an OA and water, the core being a solution, a liquid suspension or an emulsion of said OA in water.

In an advantageous embodiment, the present invention relates to a microcapsule wherein said core consists in or comprises an OA, water and at least one additional element selected among drying agents, antioxidant agents, filmogen agents and emulsifying agents, the core being a solution, a liquid suspension or an emulsion of said OA and said at least one additional elements in water.

In an advantageous embodiment, the present invention relates to a microcapsule wherein said water soluble EA are selected from alginates of monovalent cations, in particular Na⁺ alginates and K⁺ alginates,
in particular, wherein said EA are selected from alginates of monovalent cations, more particularly Na⁺ alginates and K⁺ alginates, and wherein said MII are a salt wherein the cation is a divalent metallic cation, more particularly Ca²⁺ or Mg²⁺, said salt being in particular CaCl₂, MgCl₂, calcium lactate, calcium gluconate, calcium citrate, calcium phosphate, magnesium lactate, magnesium gluconate, magnesium citrate or magnesium phosphate.

Alginates enable said OA not to be released in some external media but to be released from said microcapsules only into a specific medium, such as in the gastrointestinal tract, wherein release of said OA is desired, in a controlled manner.

In an advantageous embodiment, the present invention relates to a microcapsule wherein no divalent ion, in particular no Ca²⁺, is present in said core.

In an advantageous embodiment, the present invention relates to a microcapsule wherein said EA are lac gum,
in particular wherein said EA are lac gum, and wherein said MII are an acid, in particular ascorbic acid, citric acid, acetic acid or hydrochloric acid.

In an advantageous embodiment, the present invention relates to a microcapsule wherein said OA:
- is selected from the group comprising vitamin B5, vitamin B6, vitamin B8, vitamin B9, vitamin A, vitamin D3, vitamin K, vitamin E and vitamin C, in particular natural vitamin C, synthetic vitamin C, or salts of L-ascorbic acid, more particularly sodium L-ascorbate, calcium L-ascorbate and iron L-ascorbate, or
- comprises vitamin C, said OA being in particular a fruit juice comprising vitamin C, in particular orange juice, kiwi juice, cranberry juice, acerola juice or goji juice, said fruit juice being optionally concentrated or dried.

In an advantageous embodiment, the present invention relates to a microcapsule wherein said OA is selected from the group comprising dihydroxyacetone (DHA), enriched in omega 3 or omega 6 oil, and oxidizable enzymes, in particular superoxydismutase (SOD), said OA being in particular SOD, more particularly freeze-dried SOD or spray-dried SOD.

In an advantageous embodiment, the present invention relates to a microcapsule wherein said OA is a salt constituted by an inorganic or organic anion and a transition metal cation of oxidation state +2, said salt being in particular selected from the group comprising iron (II) sulfate, manganese (II) sulfate, chrome (II) sulfate, iron (II) oxalate, manganese (II) oxalate, chrome (II) oxalate, iron (II) acetate, manganese (II) acetate and chrome (II) acetate.

In an advantageous embodiment, the present invention relates to a microcapsule comprising at least one antioxidant, said antioxidant:
- being comprised in said core, or
- being, or being comprised in, said coating surrounding said core, or
- being comprised in said first or second layer.

In an advantageous embodiment, the present invention relates to a microcapsule wherein said antioxidant is selected from the group comprising sodium ascorbate, ascorbyl palmitate, vitamin E, tocopherol acetate, superoxydismutase (SOD), polyphenols and mixtures thereof, in particular a mixture of ascorbyl palmitate and tocopherol acetate.

In an advantageous embodiment, the present invention relates to a microcapsule wherein said core is surrounded by a precoating consisting in or comprising an antioxidant compound X selected from the group comprising sodium ascorbate, ascorbyl palmitate, vitamin E, tocopherol acetate, superoxydismutase (SOD), polyphenols and mixtures thereof, in particular a mixture of ascorbyl palmitate and tocopherol acetate,
said antioxidant being in particular SOD.

In an advantageous embodiment, the present invention relates to a microcapsule wherein said first or the second layer from the core comprises further an antioxidant compound Y selected from the group comprising sodium ascorbate, ascorbyl palmitate, vitamin E, tocopherol acetate, superoxydismutase (SOD), polyphenols and mixtures thereof, in particular a mixture of ascorbyl palmitate and tocopherol acetate, said antioxidant being in particular a mixture of ascorbyl palmitate and tocopherol acetate.

In an advantageous embodiment, the present invention relates to a microcapsule wherein said core is surrounded by a precoating consisting in or comprising a first antioxidant compound X selected from the group comprising sodium ascorbate, ascorbyl palmitate, vitamin E, tocopherol acetate, superoxydismutase (SOD), polyphenols and mixtures thereof, in particular a mixture of ascorbyl palmitate and tocopherol acetate,
said first antioxidant X being in particular SOD,
and wherein said first or the second layer from the core comprises further a second antioxidant compound Y selected from the group comprising sodium ascorbate, ascorbyl palmitate, vitamin E, tocopherol acetate, superoxydismutase (SOD), polyphenols and mixtures thereof, in particular a mixture of ascorbyl palmitate and tocopherol acetate,
said second antioxidant Y being in particular a mixture of ascorbyl palmitate and tocopherol acetate.

In an advantageous embodiment, the present invention relates to a microcapsule wherein said OA is vitamin C or comprises vitamin C and wherein said EA are selected from alginates of monovalent cations, in particular Na⁺ alginates and K⁺ alginates,
in particular a microcapsule wherein said OA is vitamin C or comprised vitamin C, wherein said EA are selected from alginates of monovalent cations, in particular Na⁺ alginates and K⁺ alginates, and wherein said MII are a salt wherein the cation is a divalent metallic cation, in particular Ca²⁺ or Mg²⁺, said salt being in particular CaCl₂, MgCl₂, calcium lactate, calcium gluconate, calcium citrate, calcium phosphate, magnesium lactate, magnesium gluconate, magnesium citrate or magnesium phosphate.

In an advantageous embodiment, the present invention relates to a microcapsule wherein said OA is SOD and wherein said EA are lac gum,
in particular a microcapsule wherein said OA is SOD, wherein said EA are lac gum, and wherein said MII are an acid, in particular ascorbic acid, citric acid, acetic acid or hydrochloric acid.

In an advantageous embodiment, the present invention relates to a microcapsule wherein the first layer is MII 1 and wherein m is equal to 1, corresponding to a microcapsule comprising:
- a core,
- a first layer of MII 1,
- a second layer of EA 1, and
- a third layer of MII 2,
MII 2 being means to induce water insolubility of EA 1.

In that case, a first insoluble coating is formed between MII 1 and EA 1, and a second insoluble coating is formed between EA 1 and MII 2.

In an advantageous embodiment, the present invention relates to a microcapsule wherein the first layer is EA 1 and wherein m is equal to 1, corresponding to a microcapsule comprising:
- a core,
- a first layer of EA 1,
- a second layer of MII 1,
- a third layer of EA 2, and
- a fourth layer of MII 2.

In that case, at least two insoluble coatings are formed: an insoluble coating is formed between MII 1 and EA 1, and a second insoluble coating is formed between EA 2 and MII 2.

In an advantageous embodiment, the present invention relates to a microcapsule wherein the first layer is MII 1 and wherein m is equal to 2, corresponding to a microcapsule comprising:
- a core,
- a first layer of MII 1,
- a second layer of EA 1,
- a third layer of MII 2,
- a fourth layer of EA 2, and
- a fifth layer of MII 2.

In that case, at least two insoluble coatings are formed: an insoluble coating is formed between MII 1 and EA 1, and a second insoluble coating is formed between EA 2 and some MII 2.

In an advantageous embodiment, the present invention relates to a microcapsule wherein the first layer is EA 1 and wherein m is equal to 2, corresponding to a microcapsule comprising:
- a core,
- a first layer of EA 1,
- a second layer of MII 1,
- a third layer of EA 2,
- a fourth layer of MII 2,
- a fifth layer of EA 2, and
- a sixth layer of MII 2,

In that case, at least three insoluble coatings are formed: an insoluble coating is formed between MII 1 and EA 1, and two insoluble coatings are formed between EA 2 and some MII 2.

In an advantageous embodiment, the present invention relates to a microcapsule wherein the first layer is MII 1 and wherein m is equal to 3, corresponding to a microcapsule comprising:
- a core,
- a first layer of MII 1,
- a second layer of EA 1,
- a third layer of MII 2,
- a fourth layer of EA 2,
- a fifth layer of MII 2,
- a sixth layer of EA 2,
- a seventh layer of MII 2.

In that case, at least three insoluble coatings are formed: an insoluble coating is formed between MII 1 and EA 1, and two insoluble coatings are formed from the two EA 2.

In an advantageous embodiment, the present invention relates to a microcapsule wherein the first layer is MII 1 and wherein m is equal to 1, corresponding to a microcapsule comprising:
- a core,
- a first layer of MII 1,
- a second layer of EA 1, and
- a third layer of MII 2,
and wherein said EA 1 are selected from alginates of monovalent cations, in particular Na⁺ alginates and K⁺ alginates and said MII 1 and MII 2 are selected from salts wherein the cation is a divalent metallic cation, in particular Ca²⁺ or Mg²⁺, said salt being in particular CaCl₂, MgCl₂, calcium lactate, calcium gluconate, calcium citrate, calcium phosphate, magnesium lactate, magnesium gluconate, magnesium citrate or magnesium phosphate.

In an advantageous embodiment, the present invention relates to a microcapsule wherein the first layer is EA 1 and wherein m is equal to 1, corresponding to a microcapsule comprising:
- a core,
- a first layer of EA 1,
- a second layer of MII 1,
- a third layer of EA 2, and
- a fourth layer of MII 2,
and wherein said EA 1 and EA 2 are Lac gum, said MII 1 and MII 2 are an acid, in particular ascorbic acid, citric acid, acetic acid or hydrochloric acid.

In that case, three insoluble coatings are formed.

In an advantageous embodiment, the present invention relates to a microcapsule wherein the first layer is EA 1 and wherein m is equal to 1,corresponding to a microcapsule comprising:
- a core,
- a coating consisting in or comprising a water insoluble compound, in particular ethylcellulose,
- a first layer of EA 1,
- a second layer of MII 1,
- a third layer of EA 2, and
- a fourth layer of MII 2,
and wherein said EA 1 and EA 2 are Lac gum, said MII 1 and MII 2 are an acid, in particular ascorbic acid, citric acid, acetic acid or hydrochloric acid.

In that case, the microcapsule comprises four insoluble coatings.

In an advantageous embodiment, the present invention relates to a microcapsule wherein the first layer is MII 1 and wherein m is equal to 2, corresponding to a microcapsule comprising:
- a core,
- a first layer of MII 1,
- a second layer of EA 1,
- a third layer of MII 2,
- a fourth layer of EA 2, and
- a fifth layer of MII 2,
and wherein said EA 1 and EA 2 are selected from alginates of monovalent cations, in particular Na⁺ alginates and K⁺ alginates and said MII 1 and MII 2 are selected from salts wherein the cation is a divalent metallic cation, in particular Ca²⁺ or Mg²⁺, said salt being in particular CaCl₂, MgCl₂, calcium lactate, calcium gluconate, calcium citrate, calcium phosphate, magnesium lactate, magnesium gluconate, magnesium citrate or magnesium phosphate.

In that case, four insoluble coatings are formed.

In an advantageous embodiment, the present invention relates to a microcapsule wherein the first layer is EA 1 and wherein m is equal to 1,corresponding to a microcapsule comprising:
- a core,
- a first layer of EA 1,
- a second layer of MII 1,
- a third layer of EA 2,
- a fourth layer of MII 2,
- a fifth layer of EA 2, and
- a sixth layer of MII 2,
and wherein said EA 1 and EA 2 are Lac gum, said MII 1 and MII 2 are an acid, in particular ascorbic acid, citric acid, acetic acid or hydrochloric acid.

In that case, five insoluble coatings are formed.

In an advantageous embodiment, the present invention relates to a microcapsule wherein the first layer is MII 1 and wherein m is equal to 3, corresponding to a microcapsule comprising:
- a core,
- a first layer of MII 1,
- a second layer of EA 1,
- a third layer of MII 2,
- a fourth layer of EA 2,
- a fifth layer of MII 2,
- a sixth layer of EA 2,
- a seventh layer of MII 2.
and wherein said EA 1 and EA 2 are selected from alginates of monovalent cations, in particular Na⁺ alginates and K⁺ alginates and said MII 1 and MII 2 are selected from salts wherein the cation is a divalent metallic cation, in particular Ca²⁺ or Mg²⁺, said salt being in particular CaCl₂, MgCl₂, calcium lactate, calcium gluconate, calcium citrate, calcium phosphate, magnesium lactate, magnesium gluconate, magnesium citrate or magnesium phosphate.

In that case, six insoluble coatings are formed.

In an advantageous embodiment, the present invention relates to a microcapsule wherein the first layer is MII 1 and wherein m is equal to 1,corresponding to a microcapsule comprising:
- a core,
- a first layer of MII 1,
- a second layer of EA 1,and
- a third layer of MII 2,
wherein said OA is vitamin C or comprised vitamin C,
and wherein said EA 1 are selected from alginates of monovalent cations, in particular Na⁺ alginates and K⁺ alginates and said MII 1 and MII 2 are selected from salts wherein the cation is a divalent metallic cation, in particular Ca²⁺ or Mg²⁺, said salt being in particular CaCl₂, MgCl₂, calcium lactate, calcium gluconate, calcium citrate, calcium phosphate, magnesium lactate, magnesium gluconate, magnesium citrate or magnesium phosphate.

In an advantageous embodiment, the present invention relates to a microcapsule wherein the first layer is MII 1 and wherein m is equal to 2, corresponding to a microcapsule comprising:
- a core,
- a first layer of MII 1,
- a second layer of EA 1,
- a third layer of MII 2,
- a fourth layer of EA 2, and
- a fifth layer of MII 2,
wherein said OA is vitamin C or comprised vitamin C,
and wherein said EA 1 and EA 2 are selected from alginates of monovalent cations, in particular Na⁺ alginates and K⁺ alginates and said MII 1 and MII 2 are selected from salts wherein the cation is a divalent metallic cation, in particular Ca²⁺ or Mg²⁺, said salt being in particular CaCl₂, MgCl₂, calcium lactate, calcium gluconate, calcium citrate, calcium phosphate, magnesium lactate, magnesium gluconate, magnesium citrate or magnesium phosphate.

In an advantageous embodiment, the present invention relates to a microcapsule wherein the first layer is MII 1 and wherein m is equal to 3, corresponding to a microcapsule comprising:
- a core,
- a first layer of MII 1,
- a second layer of EA 1,
- a third layer of MII 2,
- a fourth layer of EA 2,
- a fifth layer of MII 2,
- a sixth layer of EA 2,
- a seventh layer of MII 2,
wherein said OA is vitamin C or comprised vitamin C,
and wherein said EA 1 and EA 2 are selected from alginates of monovalent cations, in particular Na⁺ alginates and K⁺ alginates and said MII 1 and MII 2 are selected from salts wherein the cation is a divalent metallic cation, in particular Ca²⁺ or Mg²⁺, said salt being in particular CaCl₂, MgCl₂, calcium lactate, calcium gluconate, calcium citrate, calcium phosphate, magnesium lactate, magnesium gluconate, magnesium citrate or magnesium phosphate.

In an advantageous embodiment, the present invention relates to a microcapsule wherein the first layer is MII 1 and wherein m is equal to 1,corresponding to a microcapsule comprising:
- a core,
- a first layer of MII 1,
- a second layer of EA 1,and
- a third layer of MII 2,
wherein said OA is vitamin C or comprised vitamin C,
wherein said core is surrounded by a precoating consisting in or comprising SOD,
and wherein said EA 1 are selected from alginates of monovalent cations, in particular Na⁺ alginates and K⁺ alginates and said MII 1 and MII 2 are selected from salts wherein the cation is a divalent metallic cation, in particular Ca²⁺ or Mg²⁺, said salt being in particular CaCl₂, MgCl₂, calcium lactate, calcium gluconate, calcium citrate, calcium phosphate, magnesium lactate, magnesium gluconate, magnesium citrate or magnesium phosphate.

In an advantageous embodiment, the present invention relates to a microcapsule wherein the first layer is MII 1 and wherein m is equal to 1, corresponding to a microcapsule comprising:
- a core,
- a first layer of MII 1,
- a second layer of EA 1, and
- a third layer of MII 2,
wherein said OA is vitamin C or comprised vitamin C,
wherein said first or the second layer from the core comprises further a mixture of ascorbyl palmitate and tocopherol acetate,
and wherein said EA 1 are selected from alginates of monovalent cations, in particular Na⁺ alginates and K⁺ alginates and said MII 1 and MII 2 are selected from salts wherein the cation is a divalent metallic cation, in particular Ca²⁺ or Mg²⁺, said salt being in particular CaCl₂, MgCl₂, calcium lactate, calcium gluconate, calcium citrate, calcium phosphate, magnesium lactate, magnesium gluconate, magnesium citrate or magnesium phosphate.

In an advantageous embodiment, the present invention relates to a microcapsule wherein the first layer is MII 1 and wherein m is equal to 1, corresponding to a microcapsule comprising:
- a core,
- a first layer of MII 1,
- a second layer of EA1 , and
- a third layer of MII 2,
wherein said OA is vitamin C or comprised vitamin C,
wherein said core is surrounded by a precoating consisting in or comprising SOD,
wherein said first or the second layer from the core comprises further a mixture of ascorbyl palmitate and tocopherol acetate,
and wherein said EA 1 are selected from alginates of monovalent cations, in particular Na⁺ alginates and K⁺ alginates and said MII 1 and MII 2 are selected from salts wherein the cation is a divalent metallic cation, in particular Ca²⁺ or Mg²⁺, said salt being in particular CaCl₂, MgCl₂, calcium lactate, calcium gluconate, calcium citrate, calcium phosphate, magnesium lactate, magnesium gluconate, magnesium citrate or magnesium phosphate.

In another aspect, the present invention relates to a process of preparation of microcapsules described above, comprising:
(a) a step of spraying a mixture of a water soluble or organic solvent, in particular ethanol, soluble encapsulating agent (EA 1), or of means for inducing water insolubility of said encapsulating agent (MII 1), on a core consisting in or comprising an oxidizable active (OA), said core being optionally surrounded by a precoating consisting in or comprising an antioxidant compound, said core, optionally surrounded by a precoating consisting in or comprising said antioxidant compound X, being optionally surrounded by a coating consisting in or comprising a water insoluble compound,
   to obtain particles comprising a core surrounded by a first layer,
(b) a step of spraying a mixture of a water soluble or organic solvent, in particular ethanol, soluble encapsulating agent (EA 1) when the first layer is means for inducing water insolubility of said EA, or of means for inducing water insolubility of an water soluble or organic solvent, in particular ethanol, soluble EA (MII 2) when the first layer is said EA 1, on particles obtained in step (a), to obtain particles comprising a core surrounded by a first and a second layer,
(c) (m+n) steps of spraying in alternation n times mixtures of water soluble or organic solvent, in particular ethanol, soluble encapsulating agents (EA 2) and water, and m times mixtures of means for inducing water insolubility of said encapsulating agents (MII 2) and water, starting with the spraying of a mixture of the same nature as the nature of the step (a) spraying, on particles obtained in step (b), to obtain said microcapsules,
   m and n being as defined above,
   the last layer being MII 2,
   each EA 2 being preceded and/or followed by means for inducing water insolubility (MII 2) of said EA2,
   with the proviso that:
   when the first layer is MII 1 and the second layer is EA 1, and when m is equal to 1, then MII 2 are means to induce water insolubility of EA 1.

By "starting with the spraying of the same nature as the nature of the step (a) spraying", is meant that:
- said alternation of (m + n) sprayings starts with the spraying of a mixture of a water soluble or organic solvent, in particular ethanol, soluble encapsulating agent (EA 2) and water, when the step (a) spraying is the spraying of a mixture of a water soluble or organic solvent, in particular ethanol, soluble encapsulating agent (EA 1);
- said alternation of (m + n) sprayings starts with the spraying of a mixture of a water soluble or organic solvent, in particular ethanol, soluble encapsulating agent (MII 2) and water, when the step (a) spraying is the spraying of a mixture of a water soluble or organic solvent, in particular ethanol, soluble encapsulating agent (MII 1).

It is noted that said OA is, in said obtained microcapsule, predominantly in an amorphous state as spray drying is known to produce predominantly amorphous material from a homogenous solution, due to the almost instantaneous transition between liquid and solid phases.

In an advantageous embodiment, the present invention relates to a process of preparation of microcapsules described above, wherein said core is surrounded by a precoating consisting in or comprising an antioxidant compound and is obtained by spraying a mixture of said antioxidant compound on a core consisting in or comprising an oxidizable active (OA).

In an advantageous embodiment, the present invention relates to a process of preparation of microcapsules described above, wherein said core is surrounded by a coating consisting in or comprising a water insoluble compound, said core being obtained by spraying an organic solvent solution of a water insoluble compound on a core consisting in or comprising an oxidizable active (OA).

In an advantageous embodiment, the present invention relates to a process of preparation of microcapsules described above, wherein said core is surrounded by a precoating consisting in or comprising an antioxidant compound, said core, surrounded by a precoating consisting in or comprising said antioxidant compound X, being further surrounded by a coating consisting in or comprising a water insoluble compound,
said core being obtained by:
(i) spraying a mixture of said antioxidant compound on a core consisting in or comprising an oxidizable active (OA);
(ii) spraying an organic solvent solution of a water insoluble compound on the particles obtained in previous step.

In an advantageous embodiment, the present invention relates to a process of preparation of microcapsules described above, comprising, after said spraying steps, a step of drying said microcapsules to obtain dried microcapsules.

In an advantageous embodiment, the present invention relates to a process wherein said spraying steps and drying step are done in a coating device by spray, in particular a coating device by spray comprising a fluidized bed.

Examples of coating device by spray wherein the spraying step can be performed are fluidized beds, top spray, tangential spray, bottom spray or wurster devices, batch process devices or continuous devices as horizontal fluid bed or multicellular fluid bed; these devices being as described in Vandamme et al Microencapsulation; Tec & Doc; 2007; Chapter 10.

In an advantageous embodiment, the present invention relates to a process of preparation of microcapsules described above, wherein said spraying steps and drying step are done in a spray-dryer.

Examples of spray-dryer wherein the spraying steps and the drying step can be performed are single effect spray-drying towers, toll form spray-drying towers, belt dryer and multiple effect spray-drying towers with internal or external fluid bed.

In an advantageous embodiment, the present invention relates to a process of preparation of microcapsules described above, wherein said core consisting in or comprising an oxidizable active (OA) is obtained by spray-drying.

In an advantageous embodiment, the present invention relates to a process of preparation of microcapsules described above, wherein said spray-drying step, spraying steps and drying step are done in the same spray-dryer.

Examples of spray-dryer wherein the spray-drying step , the spraying steps and the drying step can be performed are single effect spray-drying towers, toll form spray-drying towers, belt dryer and multiple effect spray-drying towers with internal or external fluid bed.

In an advantageous embodiment, the present invention relates to a process wherein said spray-drying step is done in a spray-dryer and said spraying steps and drying step are done in a coating device by spray, in particular a coating device by spray comprising a fluidized bed.

Examples of spray-dryer wherein the spray-drying step can be performed are single effect spray-drying towers, toll form spray-drying towers, belt dryer and multiple effect spray-drying towers with internal or external fluid bed.

Examples of device wherein the spraying steps and the drying step can be performed are fluidized beds, top spray, tangential spray, bottom spray or wurster devices, batch process devices or continuous devices as horizontal fluid bed or multicellular fluid bed; these devices being as described in Vandamme et al Microencapsulation; Tec & Doc; 2007; Chapter 10.

In an advantageous embodiment, the present invention relates to a process of preparation of microcapsules described above, comprising:
(a) a step of spraying a mixture of a water soluble or organic solvent encapsulating agent (EA 1), or of means for inducing water insolubility of said encapsulating agent (MII 1), on a core consisting in or comprising an oxidizable active (OA),
   to obtain particles comprising a core surrounded by a first layer,
(b) a step of spraying a mixture of a water soluble or organic solvent, in particular ethanol, soluble encapsulating agent (EA 1) when the first layer is means for inducing water insolubility of said EA, or of means for inducing water insolubility of an water soluble or organic solvent, in particular ethanol, soluble EA (MII 2) when the first layer is said EA 1, on particles obtained in step (a), to obtain particles comprising a core surrounded by a first and a second layer,
(c) (m+n) steps of spraying in alternation n times mixtures of water soluble or organic solvent, in particular ethanol, soluble encapsulating agents (EA 2) and water, and m times mixtures of means for inducing water insolubility of said encapsulating agents (MII 2) and water, starting with the spraying of a mixture of the same nature as the nature of the step (a) spraying, on particles obtained in step (b), to obtain said microcapsules,
   m and n being as defined above,
   the last layer being MII 2,
   each EA 2 being preceded and/or followed by means for inducing water insolubility (MII 2) of said EA2,
   with the proviso that:
   when the first layer is MII 1 and the second layer is EA 1, and when m is equal to 1, then MII 2 are means to induce water insolubility of EA 1.

In an advantageous embodiment, the present invention relates to a process of preparation of microcapsules described above, comprising:
(a) a step of cospraying:
   - a liquid mixture A consisting in or comprising:
      o a mixture of a water soluble or organic solvent, in particular ethanol, soluble encapsulating agent (EA 1), or of means for inducing water insolubility of said encapsulating agent (MII 1),
      o an oxidizable active (OA),
      o optionally at least one additional element selected among drying agents, antioxidant agents, filmogen agents and emulsifying agents,
         and
   - a mixture B of a water soluble or organic solvent, in particular ethanol, soluble encapsulating agent (EA 1) when said liquid mixture A consists in or comprises means for inducing water insolubility of said EA, or of means for inducing water insolubility of an water soluble or organic solvent, in particular ethanol, soluble EA (MII 2) when said liquid mixture A consists in or comprises said EA 1,
   to obtain particles comprising a core surrounded by a first and a second layer,
(c) (m+n) steps of spraying in alternation n times mixtures of water soluble or organic solvent, in particular ethanol, soluble encapsulating agents (EA 2) and water, and m times mixtures of means for inducing water insolubility of said encapsulating agents (MII 2) and water, starting with the spraying of a mixture of the same nature as the nature of the step (a) spraying, on particles obtained in step (b), to obtain said microcapsules,
   m and n being as defined above,
   the last layer being MII 2,
   each EA 2 being preceded and/or followed by means for inducing water insolubility (MII 2) of said EA2,
   with the proviso that:
   when the first layer is MII 1 and the second layer is EA 1, and when m is equal to 1, then MII 2 are means to induce water insolubility of EA 1.

By co-spraying is meant that said liquid mixture A and said mixture B are sprayed jointly.

In an advantageous embodiment, co-spraying is performed with two separate means of pulverization, in particular two separate nozzles.

In an advantageous embodiment, co-spraying is performed with two combined means of pulverization, in particular a trifluid nozzle.

In an advantageous embodiment, the present invention relates to a process wherein said means for inducing water insolubility are an agent chemically reacting with said EA.

In an advantageous embodiment, the present invention relates to a process wherein said means for inducing water insolubility are an acid, a base, or a buffer.

Interestingly, the Inventors have found that the fact of inducing water insolubility of EA by spraying said means, in particular in aqueous solution, on solid dried particles (comprising said OA and said EA) obtained by spray-drying, surprisingly forms protective coatings that have the ability to protect said OA from oxidation by a given alimentary, cosmetically or pharmaceutically acceptable medium in which said microcapsules are placed, and said medium from said OA.

In an advantageous embodiment, the present invention relates to a process wherein said liquid mixture is a homogenous aqueous solution.

The liquid mixture is a homogenous aqueous solution when said OA, said EA and, provided an additional element is present in said mixture, said additional element are water soluble.

When the liquid mixture is a homogenous aqueous solution, the size of the obtained microcapsules are driven by the parameters of spray-drying, and not by the characteristics of said water soluble OA.

In an advantageous embodiment, the present invention relates to a process wherein said liquid mixture is a solid-in-liquid suspension or an emulsion.

In an advantageous embodiment, the present invention relates to a process wherein said liquid mixture is a homogenous aqueous solution consisting in or comprising said OA.

In an advantageous embodiment, the present invention relates to a process wherein said liquid mixture is a homogenous aqueous solution consisting in or comprising said OA and at least one additional element selected among drying agents, antioxidant agents, filmogen agents and emulsifying agents.

In an advantageous embodiment, the present invention relates to a process wherein said liquid mixture is a homogenous aqueous solution consisting in or comprising said OA and said water soluble or organic solvent, in particular ethanol, soluble EA.

In an advantageous embodiment, the present invention relates to a process wherein said liquid mixture is a homogenous aqueous solution consisting in or comprising said OA, said water soluble or organic solvent, in particular ethanol, soluble EA, and at least one additional element selected among drying agents, antioxidant agents, filmogen agents and emulsifying agents.

In another aspect, the present invention relates to the use of microcapsules described above for the preparation of a food or beverage composition described below.

In another aspect, the present invention relates to a food composition comprising microcapsules described above.

In another aspect, the present invention relates to a beverage composition comprising microcapsules described above.

In an advantageous embodiment, the present invention relates to a food or beverage composition comprising fermented dairy products, in particular yogurts, more particularly yogurts containing probiotics.

In an advantageous embodiment, the present invention relates to a food or beverage composition comprising unfermented dairy products.

In an advantageous embodiment, the present invention relates to a food or beverage composition comprising an animal or vegetal milk, in particular almond milk, coconut milk, rice milk and soy milk, said composition being unfermented or fermented.

In an advantageous embodiment, the present invention relates to a food or beverage composition comprising one or more fruits in addition of said microcapsules.

In an advantageous embodiment, the present invention relates to a food or beverage composition wherein said food or beverage composition is a fruit juice composition.

In an advantageous embodiment, the present invention relates to a food or beverage composition comprising one or more vegetables in addition of said microcapsules.

In an advantageous embodiment, the present invention relates to a food or beverage composition comprising:
- said microcapsules,
- water,
- one or more sugar and/or sweetener
- flavoring(s).

In an advantageous embodiment, the present invention relates to a beverage composition comprising:
- said microcapsules, wherein said OA is in particular SOD,
- water,
- optionally a fruit juice,
- optionally at least one vitamin, in particular vitamin C or riboflavin.

In an advantageous embodiment, the present invention relates to a pulverulent composition for the preparation of an instant drink comprising:
- said microcapsules, wherein said OA is in particular SOD,
- optionally at least one vitamin, in particular vitamin C or riboflavin,
said pulverulent composition to be mixed with water and/or at least a fruit juice before use.

In another aspect, the present invention relates to a cosmetic composition comprising microcapsules described above.

In another aspect, the present invention relates to a pharmaceutical composition comprising microcapsules described above.

In another aspect, the present invention relates to the use of microcapsules described above for the preparation of a food or beverage composition.

In another aspect, the present invention relates to the use of microcapsules described above for the preparation of a cosmetic composition.

In another aspect, the present invention relates to the use of microcapsules described above for the preparation of a pharmaceutical composition.

### DESCRIPTION OF THE FIGURES

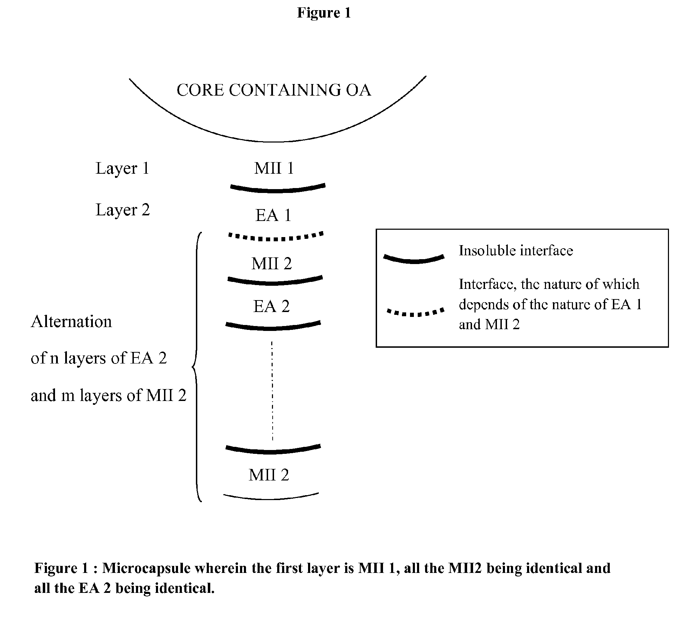

Figure 1 illustrates a microcapsule wherein the first layer is MII 1,all the MII2 being identical and all the EA 2 being identical.

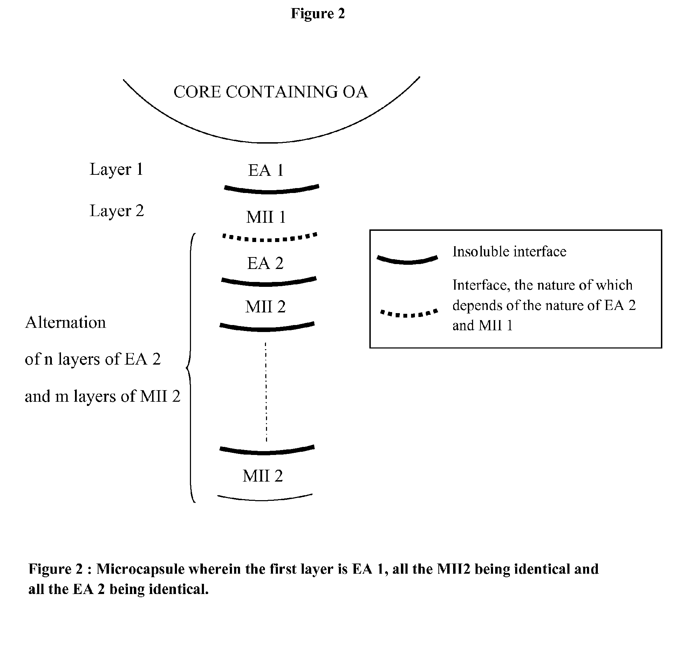

Figure 2 illustrates a microcapsule wherein the first layer is EA 1, all the MII2 being identical and all the EA 2 being identical.

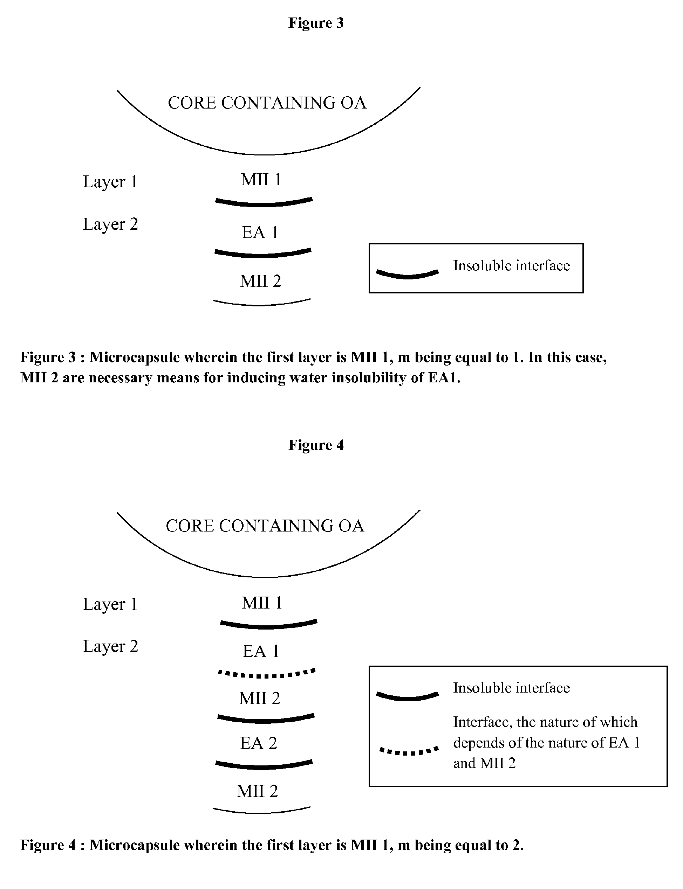

Figure 3 illustrates a microcapsule wherein the first layer is MII 1, m being equal to 1. In this case, MII 2 are necessary means for inducing water insolubility of EA1.
Figure 4 illustrates a microcapsule wherein the first layer is MII 1, m being equal to 2.

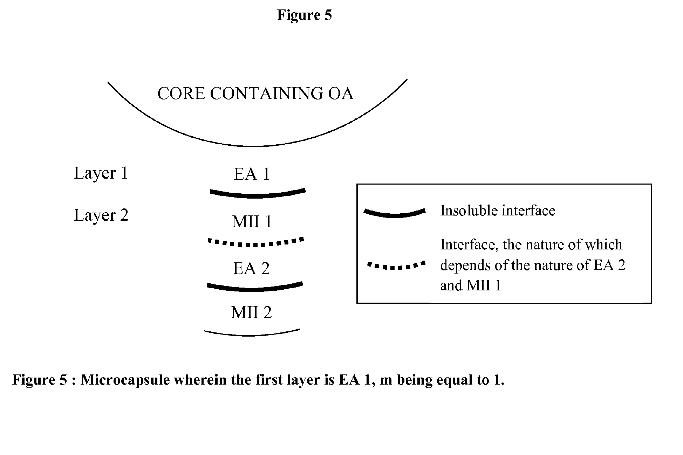

Figure 5 illustrates a microcapsule wherein the first layer is EA 1, m being equal to 1.

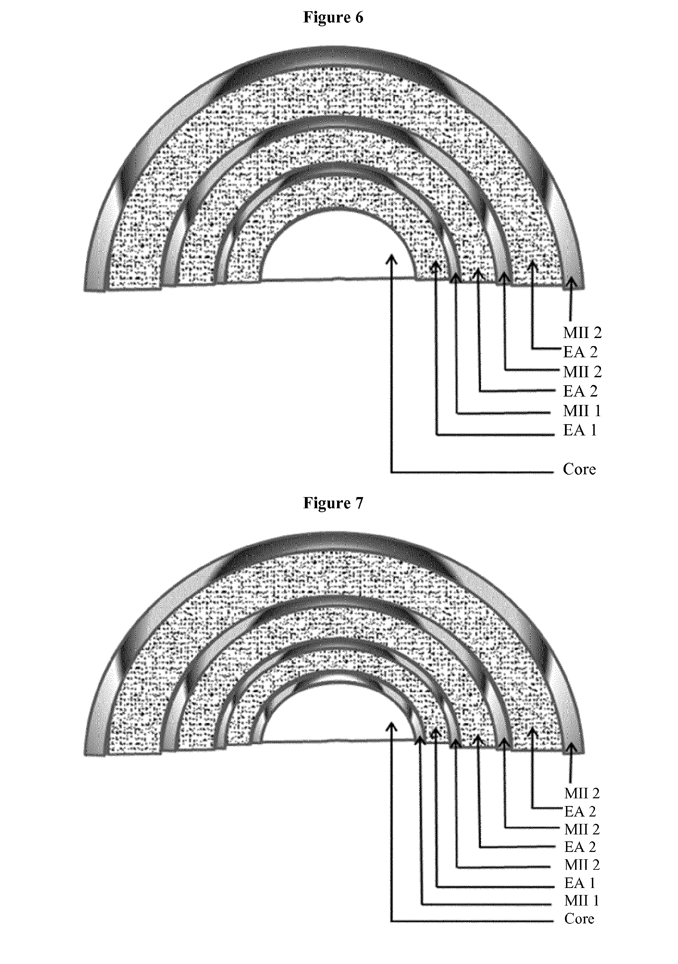

Figure 6 illustrates a microcapsule wherein the first layer is EA 1 and m is equal to 2, all the MII2 being identical to MII 1 and all the EA 2 being identical to EA 1.
Figure 7 illustrates a microcapsule wherein the first layer is MII 1 and m is equal to 3, all the MII2 being identical to MII 1 and all the EA 2 being identical to EA 1.

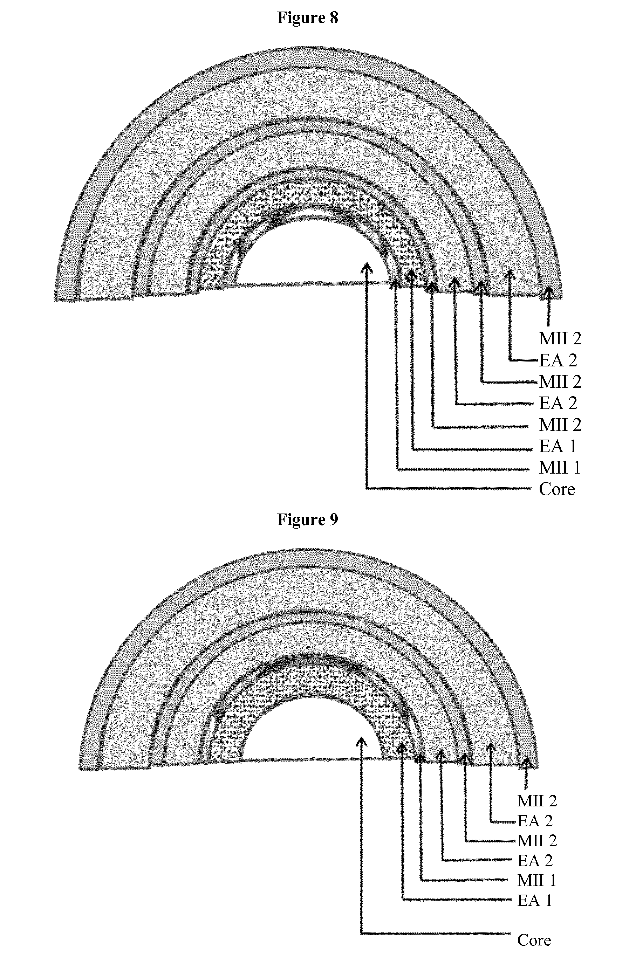

Figure 8 illustrates a microcapsule wherein the first layer is MII 1 and m is equal to 3, all the MII2 being identical and all the EA 2 being identical, the MII 2 being different from MII 1 and the EA 2 being different from EA 1.
Figure 9 illustrates a microcapsule wherein the first layer is EA 1 and m is equal to 2, all the MII2 being identical and all the EA 2 being identical, the MII 2 being different from MII 1 and the EA 2 being different from EA 1.

The present invention is further illustrated by the following examples.

### EXAMPLES

### Example 1: Microcapsules containing vitamin C (3 layers)

1.2 kg of crystalline vitamin C were fluidized in a fluid bed (GPCGI GLATT), inlet air temperature is 70°C.

290 g of a 5 % aqueous solution of calcium chloride in dry matter, were sprayed on the fluidized particles with a bifluid nozzle (spraying system SS 2050), on a top-spray position, as well known by those skilled in the art (in particular Vandamme et al Microencapsulation; Tec & Doc; 2007), and then dried.

Then, 1.65 kg of a 5 % aqueous solution of sodium alginate in dry matter, containing 3 g of ascorbyl palmitate were sprayed on the fluidized particles with a bifluid nozzle (spraying system SS 2050), on a top-spray position, and then dried. Solid particles are obtained. Another 480 g of a 5 % aqueous solution of calcium chloride in dry matter was then spray dried on the fluidized particles. Solid particles are obtained. A final drying step of 30 mn was then processed at a maximum temperature of 50°C on the microcapsules.

The final microcapsules had a moisture content of 1.1 % (infrared measurement). Particle size distribution was below 300 µm (mean particle size measured by light diffraction on Malvern sizer) and bulk density was of 850 g/l.

### Example 2: Microcapsules containing vitamin C (5 layers)

1.0 kg of crystalline vitamin C were fluidized in a fluid bed (GPCGI GLATT), inlet air temperature is 70°C.

690 g of a 5 % aqueous solution of calcium chloride in dry matter, were sprayed on the fluidized particles with a bifluid nozzle (schlick 1.2 mm), on a bottom-spray position, as well known by those skilled in the art (in particular Vandamme et al *Microencapsulation;* Tec & Doc; 2007), and then dried.

Then, 1.97 kg of a 7 % aqueous solution of sodium alginate in dry matter, containing 2.76 g of ascorbyl palmitate were sprayed on the fluidized particles with a bifluid nozzle (schlick 1.2mm) on a bottom-spray position, and then dried. Solid particles are obtained.

Another 650 g of a 5 % aqueous solution of calcium chloride in dry matter was then spray dried on the fluidized particles

Then, another 1.97 kg of a 5 % aqueous solution of sodium alginate in dry matter, were sprayed on the fluidized particles with a bifluid nozzle (spraying system SS 2050), on a top-spray position, and then dried.

Finally, another 650 g of a 5 % aqueous solution of calcium chloride in dry matter was then spray dried on the fluidized particles. Solid particles are obtained. A final drying step of 30 mn was then processed at a maximum temperature of 50°C on the microcapsules.

The final microcapsules had a moisture content of 1.1 % (infrared measurement). Particle size distribution was below 500 µm (mean particle size measured by light diffraction on Malvern sizer) and bulk density was of 750 g/l.

### Example 3 : Microcapsules containing vitamin C and SOD

1.2 kg of crystalline vitamin C were fluidized in a fluid bed (GPCGI GLATT), inlet air temperature is 70°C.

325 g of a 10% aqueous solution of SOD in dry matter, were sprayed on the fluidized particles with a bifluid nozzle (spraying system SS 2050), on a top-spray position, as well known by those skilled in the art (in particular Vandamme et al Microencapsulation; Tec & Doc; 2007), and then dried.

360 g of a 5 % aqueous solution of calcium chloride in dry matter, were sprayed on the fluidized particles with a bifluid nozzle (spraying system SS 2050), on a top-spray position, Then, 3.2 kg of a 5 % aqueous solution of sodium alginate in dry matter, containing 3.5 g of ascorbyl palmitate were sprayed on the fluidized particles with a bifluid nozzle (spraying system SS 2050), on a top-spray position, and then dried. Solid particles are obtained. Another 650 g of a 5 % aqueous solution of calcium chloride in dry matter was then spray dried on the fluidized particles

Then, another 3.0 kg of a 5 % aqueous solution of sodium alginate in dry matter, were sprayed on the fluidized particles with a bifluid nozzle (spraying system SS 2050), on a top-spray position, and then dried.

Finally, another 650 g of a 5 % aqueous solution of calcium chloride in dry matter was then spray dried on the fluidized particles. Solid particles are obtained. A final drying step of 30 mn was then processed at a maximum temperature of 50°C on the microcapsules.

The final microcapsules had a moisture content of 1.1 % (infrared measurement). Particle size distribution was below 500 µm (mean particle size measured by light diffraction on Malvern sizer) and bulk density was of 750 g/l.

### Example 4: Microcapsules containing vitamin C and Phytrox (3 layers)

1.2 kg of crystalline vitamin C were fluidized in a fluid bed (GPCGI GLATT), inlet air temperature is 70°C.

250 g of a 5 % aqueous solution of calcium chloride in dry matter, were sprayed on the fluidized particles with a bifluid nozzle (schlick 1.2mm), on a bottom-spray position , as well known by those skilled in the art (in particular Vandamme et al Microencapsulation; Tec & Doc; 2007), and then dried.

Then, 1.12 kg of a 7 % aqueous solution of sodium alginate in dry matter, containing 225 g of Tocobiol L46 (ascorbyl palmitate and tocopherol acetate) , and then the total preparation was sprayed on the fluidized particles with a bifluid nozzle (schlick 1.2 mm), on a bottom-spray position, and then dried. Solid particles are obtained.

Another 250 g of a 5 % aqueous solution of calcium chloride in dry matter was then spray dried on the fluidized particles. Solid particles are obtained. A final drying step of 30 mn was then processed at a maximum temperature of 50°C on the microcapsules.

The final microcapsules had a moisture content of 1.1 % (infrared measurement). Particle size distribution was below 300 µm (mean particle size measured by light diffraction on Malvern sizer) and bulk density was of 850 g/l.

### Example 5: Microcapsules containing vitamin C, SOD and Phytrox (3 layers)

1.2 kg of crystalline vitamin C were fluidized in a fluid bed (GPCGI GLATT), inlet air temperature is 70°C.

325 g of a 10% aqueous solution of SOD in dry matter, were sprayed on the fluidized particles with a bifluid nozzle (schlick 1.2 mm), on a bottom-spray position, as well known by those skilled in the art (in particular Vandamme et al Microencapsulation; Tec & Doc; 2007), and then dried.

290 g of a 5 % aqueous solution of calcium chloride in dry matter, were sprayed on the fluidized particles with a bifluid nozzle (spraying system SS 2050), on a top-spray position, , and then dried.

Then, 1.65 kg of a 5 % aqueous solution of sodium alginate in dry matter, containing a mix (Tocobiol ®) of 25 g of tocopherol acetate and 12 g of ascorbyl palmitate were sprayed on the fluidized particles with a bifluid nozzle (spraying system SS 2050), on a top-spray position, and then dried. Solid particles are obtained.

Another 480 g of a 5 % aqueous solution of calcium chloride in dry matter was then spray dried on the fluidized particles. Solid particles are obtained. A final drying step of 30 mn was then processed at a maximum temperature of 50°C on the microcapsules.

The final microcapsules had a moisture content of 1.1 % (infrared measurement). Particle size distribution was below 300 µm (mean particle size measured by light diffraction on Malvern sizer) and bulk density was of 850 g/l.

### Example 6: Microcapsules containing vitamin C (3 layers)

1.2 kg of crystalline vitamin C were fluidized in a fluid bed (GPCGI GLATT), inlet air temperature is 70°C.

262 g of a 5 % aqueous solution of calcium lactate in dry matter, were sprayed on the fluidized particles with a bifluid nozzle (schlick 1.2 mm), on a bottom-spray position, as well known by those skilled in the art (in particular Vandamme et al Microencapsulation; Tec & Doc; 2007), and then dried.

Then, 1120 g of a aqueous solution of 7% sodium alginate in dry matter and then was sprayed on the fluidized particles with a bifluid nozzle (schlick 1.2mm), on a bottom-spray position, and then dried. Solid particles are obtained.

Another 262 g of a 5 % aqueous solution of calcium lactate in dry matter was then spray dried on the fluidized particles. Solid particles are obtained. A final drying step of 30 mn was then processed at a maximum temperature of 50°C on the microcapsules.

The final microcapsules had a moisture content of 1.1 % (infrared measurement). Particle size distribution was below 300 µm (mean particle size measured by light diffraction on Malvern sizer) and bulk density was of 850 g/l.

### Example 7: Microcapsules containing vitamin C (3 layers)

870 g of crystalline vitamin C were fluidized in a fluid bed (GPCGI GLATT), inlet air temperature is 70°C.

600 g of a 5 % aqueous solution of calcium gluconate in dry matter, were sprayed on the fluidized particles with a bifluid nozzle (spraying system SS 2050), on a top-spray position, as well known by those skilled in the art (in particular Vandamme et al Microencapsulation; Tec & Doc; 2007), and then dried.

Then, 2.4 kg of a 5 % aqueous solution of sodium alginate in dry matter, containing 3 g of ascorbyl palmitate were sprayed on the fluidized particles with a bifluid nozzle (spraying system SS 2050), on a top-spray position, and then dried. Solid particles are obtained.

Another 600 g of a 5 % aqueous solution of calcium gluconate in dry matter was then spray dried on the fluidized particles. Solid particles are obtained. A final drying step of 30 mn was then processed at a maximum temperature of 50°C on the microcapsules.

The final microcapsules had a moisture content of 1.1 % (infrared measurement). Particle size distribution was below 300 µm (mean particle size measured by light diffraction on Malvern sizer) and bulk density was of 850 g/l.

### Example 8: Microcapsules containing vitamin C (3 layers)

1 kg of calcium ascorbate were fluidized in a fluid bed (GPCGI GLATT), inlet air temperature is 70°C.

635 g of a 5 % aqueous solution of calcium chloride in dry matter, were sprayed on the fluidized particles with a bifluid nozzle (schlick 1.2 mm), on a bottom-spray position, as well known by those skilled in the art (in particular Vandamme et al Microencapsulation; Tec & Doc; 2007), and then dried.

Then, 3.82 kg of a 7 % aqueous solution of sodium alginate in dry matter, containing 2.67 g of ascorbyl palmitate were sprayed on the fluidized particles with a bifluid nozzle (schlick 1.2mm), on a bottom-spray position, and then dried. Solid particles are obtained.

Another 635 g of a 5 % aqueous solution of calcium chloride in dry matter was then spray dried on the fluidized particles. Solid particles are obtained. A final drying step of 30 mn was then processed at a maximum temperature of 50°C on the microcapsules.

The final microcapsules had a moisture content of 1.1 % (infrared measurement). Particle size distribution was below 300 µm (mean particle size measured by light diffraction on Malvern sizer) and bulk density was of 850 g/l.

### Example 9: Microcapsules containing vitamin C, SOD and Tocobiol L46 (3 layers)

1.2 kg of crystalline vitamin C were fluidized in a fluid bed (GPCGI GLATT), inlet air temperature is 70°C.

320 g of a 6% aqueous solution containing a mix of 13.2g of SOD and 6.6 g of Tocobiol L46 in dry matter, were sprayed on the fluidized particles with a bifluid nozzle (schlick 1.2 mm), on a bottom-spray position, as well known by those skilled in the art (in particular Vandamme et al Microencapsulation; Tec & Doc; 2007), and then dried.

Then, 1.13 kg of a 7 % aqueous solution of sodium alginate in dry matter was sprayed on the fluidized particles with a bifluid nozzle (schlick 1.2mm), on a bottom-spray position, and then dried. Solid particles are obtained.

Another 450 g of a 5 % aqueous solution of calcium chloride in dry matter was then spray dried on the fluidized particles. Solid particles are obtained. A final drying step of 30 mn was then processed at a maximum temperature of 50°C on the microcapsules.

The final microcapsules had a moisture content of 1.1 % (infrared measurement). Particle size distribution was below 300 µm (mean particle size measured by light diffraction on Malvern sizer) and bulk density was of 850 g/l.

### Example 10: Microcapsules containing vitamin C (7 layers)

0.8 kg of crystalline vitamin C were fluidized in a fluid bed (GPCGI GLATT), inlet air temperature is 70°C.

174 g of a 5 % aqueous solution of calcium chloride in dry matter, were sprayed on the fluidized particles with a bifluid nozzle (schlick 1.2 mm), on a bottom-spray position, as well known by those skilled in the art (in particular Vandamme et al Microencapsulation; Tec & Doc; 2007), and then dried.

Then, 770 g of a 7 % aqueous solution of sodium alginate in dry matter, containing 1.8 g of ascorbyl palmitate were sprayed on the fluidized particles with a bifluid nozzle (schlick 1.2mm) on a bottom-spray position, and then dried. Solid particles are obtained.

Another 174 g of a 5 % aqueous solution of calcium chloride in dry matter was then spray dried on the fluidized particles

Then, 2.86 kg of a 7 % aqueous solution of sodium alginate in dry matter, were sprayed on the fluidized particles with a bifluid nozzle (spraying system SS 2050), on a top-spray position, and then dried.

Another 266 g of a 5 % aqueous solution of calcium chloride in dry matter was then spray dried on the fluidized particles. Solid particles are obtained.

Then, another 2.86 kg of a 7 % aqueous solution of sodium alginate in dry matter, were sprayed on the fluidized particles with a bifluid nozzle (spraying system SS 2050), on a top-spray position, and then dried.

Finally, another 266 g of a 5 % aqueous solution of calcium chloride in dry matter was then spray dried on the fluidized particles. Solid particles are obtained. A final drying step of 30 mn was then processed at a maximum temperature of 50°C on the microcapsules.

The final microcapsules had a moisture content of 1.1 % (infrared measurement). Particle size distribution was below 500 µm (mean particle size measured by light diffraction on Malvern sizer) and bulk density was of 750 g/l.

### Example 11 : Microcapsules containing SOD and Lac gum (4 layers)

600 g of freeze-dried (SOD) were fluidized in a fluid bed (GPCGI GLATT), inlet air temperature is 30°C. 360 g of Lac gum were dissolved at 10% dry matter in ethanol and sprayed on the fluidized SOD, and dried.

120 g of a 10% solution of ascorbic acid was then sprayed and dried.

Another 210g of Lac gum were dissolved at 10% dry matter in ethanol and sprayed on the fluidized SOD and then dried.

A final 20 g of chlorhydric acid solution 1M, diluted in 250 g of water, were sprayed on the fluidized product, and then dried.

Solid particles are obtained. A final drying step of 30 mn was then processed at a maximum temperature of 40°C on the microcapsules.

The Final product had a moisture content of 1.9% and an average particle size mean of 380µm (Median diameter Dv(0.5) measured by laser particle sizer Malvern)

### Example 12 : Microcapsules containing Ferric sulfate (3 layers)

920 g of crystalline ferric sulfate heptahydrate were fluidized in a fluid bed (GPCG1 GLATT), inlet air temperature is 40°C.

100 g of a 10 % aqueous solution of calcium chloride in dry matter, were sprayed on the fluidized particles with a bifluid nozzle (spraying system SS 2050), on a top-spray position, as well known by those skilled in the art (in particular Vandamme et al Microencapsulation; Tec & Doc; 2007), and then dried.

Then, 795 g of a 7.5 % aqueous solution of sodium alginate in dry matter, were sprayed on the fluidized particles with a bifluid nozzle (spraying system SS 2050), on a top-spray position, and then dried. Solid particles are obtained.

Another 100 g of a 10 % aqueous solution of calcium chloride in dry matter was then spray dried on the fluidized particles. Solid particles are obtained. A final drying step of 30 mn was then processed at a maximum temperature of 30°C on the microcapsules.

The final microcapsules had a moisture content of 19% (infrared measurement). Particle size distribution was 310 µm (mean particle size measured by light diffraction on Malvern sizer) and bulk density was of 870 g/l.

### Example 13 : Microcapsules containing oxidizable oil (3 layers)

349 g of tocoferol acetate was mixed with 160g of modified starch, 247 g of maltodextrin, 40 g of alginate and 1.22 kg of water.

The preparation was homogenized at 200 bars.

Another 8 g of a calcium chloride solution at 5% dry matter was prepared.

The homogenized preparation was then sprayed in a single stage dryer (Minor production tower, GEA-NIRO) combined with the calcium chloride solution as a mean for insolubility with a trifluid nozzle. Drying was made with an inlet temperature of 120°C and outlet temperature of 70°C.

150 g of a 5% solution of calcium chloride in dry matter were sprayed on the fluidized particles with a bifluid nozzle and then dried.

500 g of the dried particles obtained are then fluidized in a fluid bed (Glatt GPCG1).

800 g of a 5% aqueous solution of sodium alginate in dry matter were sprayed on the fluidized particles with a bifluid nozzle , on a top spray position and then dried.

150 g of a 5% solution of calcium chloride in dry matter were sprayed on the fluidized particles with a bifluid nozzle and then dried.

The final microcapsules are insoluble and have a mean particle size of 240µm (mean particle size measured by light diffraction on Malvern sizer), a moisture content of 3.3 % and a bulk density of 350 g/l.

### Example 14: Microcapsules containing vitamin C

1.2 kg of crystalline vitamin C were fluidized in a fluid bed (GPCGI GLATT), inlet air temperature is 70°C.

1000 g of a 10% ethylcellulose in dry matter in ethanol solution were sprayed on the fluidized particles with a bifluid nozzle (spraying system SS 2050), on a top-spray position, as well known by those skilled in the art (in particular Vandamme et al Microencapsulation; Tec & Doc; 2007), and then dried.

290 g of a 5 % solution of calcium chloride in dry matter, were sprayed on the fluidized particles with a bifluid nozzle (spraying system SS 2050), on a top-spray position, and then dried.

Then, 1.65 kg of a 5 % solution of sodium alginate in dry matter, containing 3 g of ascorbyl palmitate were sprayed on the fluidized particles with a bifluid nozzle (spraying system SS 2050), on a top-spray position, and then dried. Solid particles are obtained.

Another 480 g of a 5% solution of calcium chloride in dry matter was then spray dried on the fluidized particles. Solid particles are obtained A final drying step of 30 mn was then processed at a maximum temperature of 50°C on the microcapsules.

The final microcapsules had a moisture content of 1.2% (infrared measurement). Particle size distribution was 480 µm (mean particle size measured by light diffraction on Malvern sizer) and bulk density was of 340 g/l.

### Example 15 : Monitoring of the microcapsules in an aqueous medium

0.5 g to 1g of the capsules of example 6 are dispersed in the sampler wet device for liquids (MS 519 type) of a particle sizer MALVERN, MASTERSIZER MAM 5005, type MSS using the 300 RF lens and demineralized water.

Particle size distribution is measured each 5 mn during 30 mn. Dispersion in the wet device is maintained during all the 30 mn measurement.

As seen in table 1, a small decrease of the particle occurs, linked to the dispersion of the biggest agglomerates and then mean particle size keeps constant all along the 30 mn, showing the insolubility of the microcapsules of the invention.

**Table 1**

| | | | | | | | |
|---|---|---|---|---|---|---|---|
| Time | (min) | 0 | 5 | 10 | 15 | 20 | 30 |
| Granulometry | D(v;0,5) (µm) | 198 | 185 | 181 | 182 | 178 | 173 |

## Claims

1. Microcapsule consisting in or containing:
• a core consisting in or comprising an oxidizable active (OA),
said core being optionally surrounded by a precoating consisting in or comprising an antioxidant compound X,
said core, optionally surrounded by a precoating consisting in or comprising said antioxidant compound X, being optionally surrounded by a coating consisting in or comprising a water insoluble compound,
• a first layer surrounding the core by either:
- a water soluble or organic solvent, in particular ethanol, soluble encapsulating agent (EA 1), or
- means for inducing water insolubility of said encapsulating agent (MII 1),
• a second layer surrounding the first layer by:
- a water soluble or organic solvent, in particular ethanol, soluble encapsulating agent (EA 1) when the first layer is means for inducing water insolubility of said encapsulating agent,
- means for inducing water insolubility of an water soluble or organic solvent, in particular ethanol, soluble encapsulating agent (MII 1) when the first layer is said encapsulating agent,
the first or the second layer from the core optionally comprising further an antioxidant compound Y,
and
• an alternation of n layers of water soluble or organic solvent, in particular ethanol, soluble encapsulating agents (EA 2) and of m layers of means for inducing water insolubility of said encapsulating agents (MII 2), surrounding the second layer, starting with a layer of the same nature as the nature of the first one,
m being equal to 1, 2, 3, 4, 5, 6, 7, 8, 9 or 10,
n = m, when the first layer is said EA 1, or n = m - 1, when the first layer is said MII 1, the last layer being MII 2,
each EA 2 being preceded and/or followed by means for inducing water insolubility (MII 2) of said EA2,
with the proviso that:
when the first layer is MII 1 and the second layer is EA 1, and when m is equal to 1, then MII 2 are means to induce water insolubility of EA 1.

2. Microcapsule according to claim 1, consisting in or containing:
• a core consisting in or comprising an oxidizable active (OA),
said core being optionally surrounded by a precoating consisting in or comprising an antioxidant compound X,
• a first layer surrounding the core by either:
- a water soluble or organic solvent, in particular ethanol, soluble encapsulating agent (EA 1), or
- means for inducing water insolubility of said encapsulating agent (MII 1),
• a second layer surrounding the first layer by:
- a water soluble or organic solvent, in particular ethanol, soluble encapsulating agent (EA 1) when the first layer is means for inducing water insolubility of said encapsulating agent,
- means for inducing water insolubility of a water soluble or organic solvent, in particular ethanol, soluble encapsulating agent (MII 1) when the first layer is said encapsulating agent,
the first or the second layer from the core optionally comprising further an antioxidant compound Y,
and
• an alternation of n layers of said EA 1 and of m layers of said MII 1, surrounding the second layer, starting with a layer of the same nature as the nature of the first one,
m being equal to 1, 2, 3, 4, 5, 6, 7, 8, 9 or 10,
n = m, when the first layer is said EA 1, or n = m - 1, when the first layer is said MII 1, the last layer being MII 1.

3. Microcapsule according to claim 1, wherein:
- the EA 2 of said n layers are identical,
- the MII 2 of said m layers are identical,
- EA 1 is not identical to said EA 2, and/or MII 1 are not identical to said MII 2.

4. Microcapsule according to anyone of claims 1 to 3, wherein:
• said means for inducing water insolubility are an agent chemically reacting with said EA, or
• said means for inducing water insolubility are an acid, a base, or a buffer.

5. Microcapsule according to anyone of claims 1 to 4, wherein said layers are such that, when said microcapsule is placed in an alimentary, cosmetically or pharmaceutically acceptable medium:
• said OA is not degraded by element(s) of said medium, and
• said element(s) of the medium is (are) not degraded by said OA.

6. Microcapsule according to anyone of claims 1 to 5, wherein the mass of said OA is within the range from 40 to 99.5%, preferably from 60 to 98%, more preferably from 70 to 95%, of the total mass of said microcapsule.

7. Microcapsule according to anyone of claims 1 to 6, wherein said microcapsule size is in range from 1 µm to 3 mm, preferably from 50 to 1000 µm, more preferably from 100 to 600 µm.

8. Microcapsule according to anyone of claims 1 to 7, wherein said OA is in a crystalline or amorphous state, in particular a microcapsule wherein said core consists in or comprises an OA in a crystalline or amorphous state and at least one additional element selected among drying agents, antioxidant agents, filmogen agents and emulsifying agents.

9. Microcapsule according to anyone of claims 1 to 8, wherein said water soluble EA are selected from alginates of monovalent cations, in particular Na⁺ alginates and K⁺ alginates,
in particular, wherein said EA are selected from alginates of monovalent cations, more particularly Na⁺ alginates and K⁺ alginates, and wherein said MII are a salt wherein the cation is a divalent metallic cation, more particularly Ca²⁺ or Mg²⁺, said salt being in particular CaCl₂, MgCl₂, calcium lactate, calcium gluconate, calcium citrate, calcium phosphate, magnesium lactate, magnesium gluconate, magnesium citrate or magnesium phosphate.

10. Microcapsule according to anyone of claims 1 to 8, wherein said EA are lac gum,
in particular wherein said EA are lac gum, and wherein said MII are an acid, in particular ascorbic acid, citric acid, acetic acid or hydrochloric acid.

11. Microcapsule according to anyone of claims 1 to 10,
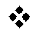 wherein said OA:
• is selected from the group comprising vitamin B5, vitamin B6, vitamin B8, vitamin B9, vitamin A, vitamin D3, vitamin K, vitamin E and vitamin C, in particular natural vitamin C, synthetic vitamin C, or salts of L-ascorbic acid, more particularly sodium L-ascorbate, calcium L-ascorbate and iron L-ascorbate, or
• comprises vitamin C, said OA being in particular a fruit juice comprising vitamin C, in particular orange juice, kiwi juice, cranberry juice, acerola juice or goji juice, said fruit juice being optionally concentrated or dried,
or
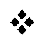 wherein said OA is selected from the group comprising dihydroxyacetone (DHA), enriched in omega 3 or omega 6 oil, and oxidizable enzymes, in particular superoxydismutase (SOD),
said OA being in particular SOD, more particularly freeze-dried SOD or spray-dried SOD, or
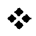 wherein said OA is a salt constituted by an inorganic or organic anion and a transition metal cation of oxidation state +2, said salt being in particular selected from the group comprising iron (II) sulfate, manganese (II) sulfate, chrome (II) sulfate, iron (II) oxalate, manganese (II) oxalate, chrome (II) oxalate, iron (II) acetate, manganese (II) acetate and chrome (II) acetate.

12. Microcapsule according to anyone of claims 1 to 11, comprising at least one antioxidant, said antioxidant:
- being comprised in said core, or
- being, or being comprised in, said coating surrounding said core, or
- being comprised in said first or second layer.
in particular a microcapsule, wherein said antioxidant is selected from the group comprising sodium ascorbate, ascorbyl palmitate, vitamin E, tocopherol acetate, superoxydismutase (SOD), polyphenols and mixtures thereof, in particular a mixture of ascorbyl palmitate and tocopherol acetate,
in particular a microcapsule, wherein said core is surrounded by a precoating consisting in or comprising an antioxidant compound selected from the group comprising sodium ascorbate, ascorbyl palmitate, vitamin E, tocopherol acetate, superoxydismutase (SOD), polyphenols and mixtures thereof, in particular a mixture of ascorbyl palmitate and tocopherol acetate,
said antioxidant being in particular SOD,
in particular a microcapsule, wherein said first or the second layer from the core comprises further an antioxidant compound selected from the group comprising sodium ascorbate, ascorbyl palmitate, vitamin E, tocopherol acetate, superoxydismutase (SOD), polyphenols and mixtures thereof, in particular a mixture of ascorbyl palmitate and tocopherol acetate,
said antioxidant being in particular a mixture of ascorbyl palmitate and tocopherol acetate,
in particular a microcapsule, wherein said core is surrounded by a precoating consisting in or comprising a first antioxidant compound selected from the group comprising sodium ascorbate, ascorbyl palmitate, vitamin E, tocopherol acetate, superoxydismutase (SOD), polyphenols and mixtures thereof, in particular a mixture of ascorbyl palmitate and tocopherol acetate,
said first antioxidant being in particular SOD,
and wherein said first or the second layer from the core comprises further a second antioxidant compound selected from the group comprising sodium ascorbate, ascorbyl palmitate, vitamin E, tocopherol acetate, superoxydismutase (SOD), polyphenols and mixtures thereof, in particular a mixture of ascorbyl palmitate and tocopherol acetate,
said second antioxidant being in particular a mixture of ascorbyl palmitate and tocopherol acetate.

13. Microcapsule according to anyone of claims 1 to 12,
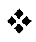 wherein the first layer is MII and wherein m is equal to 1, corresponding to a microcapsule comprising:
- a core,
- a first layer of MII 1,
- a second layer of EA 1, and
- a third layer of MII 2,
MII 2 being means to induce water insolubility of EA 1,
and in particular wherein said EA 1 are selected from alginates of monovalent cations, in particular Na⁺ alginates and K⁺ alginates and said MII 1 and MII 2 are selected from salts wherein the cation is a divalent metallic cation, in particular Ca²⁺ or Mg²⁺, said salt being in particular CaCl₂, MgCl₂, calcium lactate, calcium gluconate, calcium citrate, calcium phosphate, magnesium lactate, magnesium gluconate, magnesium citrate or magnesium phosphate,
or
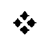 wherein the first layer is EA 1 and wherein m is equal to 1, corresponding to a microcapsule comprising:
- a core,
- a first layer of EA 1,
- a second layer of MII 1,
- a third layer of EA 2, and
- a forth layer of MII 2,
and in particular wherein said EA 1 and EA 2 are Lac gum, said MII 1 and MII 2 are an acid, in particular ascorbic acid, citric acid, acetic acid or hydrochloric acid,
or
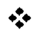 wherein the first layer is EA 1 and wherein m is equal to 1, corresponding to a microcapsule comprising:
- a core,
- a coating consisting in or comprising a water insoluble compound, in particular ethylcellulose,
- a first layer of EA 1,
- a second layer of MII 1,
- a third layer of EA 2, and
- a forth layer of MII 2,
and in particular wherein said EA 1 and EA 2 are Lac gum, said MII 1 and MII 2 are an acid, in particular ascorbic acid, citric acid, acetic acid or hydrochloric acid,
or
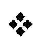 wherein the first layer is MII and wherein m is equal to 2, corresponding to a microcapsule comprising:
- a core,
- a first layer of MII 1,
- a second layer of EA 1,
- a third layer of MII 2,
- a fourth layer of EA 2, and
- a fifth layer of MII 2,
and in particular wherein said EA 1 and EA 2 are selected from alginates of monovalent cations, in particular Na⁺ alginates and K⁺ alginates and said MII 1 and MII 2 are selected from salts wherein the cation is a divalent metallic cation, in particular Ca²⁺ or Mg²⁺, said salt being in particular CaCl₂, MgCl₂, calcium lactate, calcium gluconate, calcium citrate, calcium phosphate, magnesium lactate, magnesium gluconate, magnesium citrate or magnesium phosphate,
or
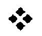 wherein the first layer is MII 1 and wherein m is equal to 3, corresponding to a microcapsule comprising:
- a core,
- a first layer of MII 1,
- a second layer of EA 1,
- a third layer of MII 2,
- a fourth layer of EA 2,
- a fifth layer of MII 2,
- a sixth layer of EA 2,
- a seventh layer of MII 2.
and in particular wherein said EA 1 and EA 2 are selected from alginates of monovalent cations, in particular Na⁺ alginates and K⁺ alginates and said MII 1 and MII 2 are selected from salts wherein the cation is a divalent metallic cation, in particular Ca²⁺ or Mg²⁺, said salt being in particular CaCl₂, MgCl₂, calcium lactate, calcium gluconate, calcium citrate, calcium phosphate, magnesium lactate, magnesium gluconate, magnesium citrate or magnesium phosphate.

14. Process of preparation of microcapsules according to anyone of claims 1 to 13, comprising:
(a) a step of spraying a mixture of a water soluble or organic solvent, in particular ethanol, soluble encapsulating agent (EA 1), or of means for inducing water insolubility of said encapsulating agent (MII 1), on a core consisting in or comprising an oxidizable active (OA), said core being optionally surrounded by a precoating consisting in or comprising an antioxidant compound, said core, optionally surrounded by a precoating consisting in or comprising said antioxidant compound X, being optionally surrounded by a coating consisting in or comprising a water insoluble compound,
to obtain particles comprising a core surrounded by a first layer,
(b) a step of spraying a mixture of a water soluble or organic solvent, in particular ethanol, soluble encapsulating agent (EA 1) when the first layer is means for inducing water insolubility of said EA, or of means for inducing water insolubility of an water soluble or organic solvent, in particular ethanol, soluble EA (MII 2) when the first layer is said EA 1,on particles obtained in step (a), to obtain particles comprising a core surrounded by a first and a second layer,
(c) (m+n) steps of spraying in alternation n times mixtures of water soluble or organic solvent, in particular ethanol, soluble encapsulating agents (EA 2) and water, and m times mixtures of means for inducing water insolubility of said encapsulating agents (MII 2) and water, starting with the spraying of a mixture of the same nature as the nature of the step (a) spraying, on particles obtained in step (b), to obtain said microcapsules,
m and n being as defined above,
the last layer being MII 2,
each EA 2 being preceded and/or followed by means for inducing water insolubility (MII 2) of said EA2,
with the proviso that:
when the first layer is MII 1 and the second layer is EA 1, and when m is equal to 1, then MII 2 are means to induce water insolubility of EA 1,
said process comprising in particular, after said spraying steps, a step of drying said microcapsules to obtain dried microcapsules.

15. Use of microcapsules according to anyone of claims 1 to 13 for the preparation of a food or beverage composition,
in particular, said food or beverage composition comprising said microcapsules and:
- fermented dairy products, in particular yogurts, more particularly yogurts containing probiotics,
- unfermented dairy products,
- an animal or vegetal milk, in particular almond milk, coconut milk, rice milk and soy milk, said composition being unfermented or fermented,
- one or more fruits in addition of said microcapsules,
- one or more vegetables in addition of said microcapsules,
- water, one or more sugar and/or sweetener, and flavoring(s),
in particular, said beverage composition comprising:
• said microcapsules, wherein said OA is in particular SOD,
• water,
• optionally a fruit juice,
• optionally at least one vitamin, in particular vitamin C or riboflavin.
